# EUROPÄISCHE PATENTSCHRIFT

(11) **EP 1 651 711 B1**
(45) Veröffentlichungstag und Bekanntmachung des Hinweises auf die Patenterteilung: **06.08.2008**
(21) Anmeldenummer: 04763184.1
(22) Anmeldetag: 13.07.2004
(51) Int. Cl.: C08J 7/04, B32B 27/00

(54) **POLYFORMALE ALS COEXTRUSIONSSCHUTZSCHICHT AUF POLYCARBONAT**
POLYFORMALS AS A COEXTRUDED PROTECTIVE LAYER ON POLYCARBONATE
POLYFORMALS EN TANT QUE COUCHE PROTECTRICE COEXTRUDEE SUR DU POLYCARBONATE

(30) Priorität: 25.07.2003 DE 10333927
(43) Veröffentlichungstag der Anmeldung: 03.05.2006
(73) Patentinhaber: Bayer MaterialScience AG, 51368 Leverkusen (DE)
(72) Erfinder: HEUER, Helmut-Werner, 47829 Krefeld (DE); WEHRMANN, Rolf, 47800 Krefeld (DE); BRAUN, Sylvia, 47239 Duisburg (DE); RÜDIGER, Claus, 47829 Krefeld (DE); ROELOFS, Marco, 47807 Krefeld (DE); NISING, Wolfgang, 53757 Sankt Augustin (DE); ANDERS, Siegfried, 51147 Köln (DE); RÖHNER, Jürgen, 51069 Köln (DE); GORNY, Rüdiger, Moon Twp., PA 15108 (US)
(86) Internationale Anmeldenummer: PCT/EP2004/007712
(87) Internationale Veröffentlichungsnummer: WO 2005/012405

(56) Entgegenhaltungen:
- EP-A- 0 110 221
- US-A- 4 163 833

## Beschreibung

Die vorliegende Erfindung betrifft mehrschichtige Erzeugnisse, insbesondere Stegplatten oder Massivplatten, umfassend mindestens eine Schicht enthaltend einen transparenten Thermoplasten und mindestens eine Schicht enthaltend einen transparenten Thermoplasten auf Basis von Polyformalen- oder Copolyformalen, sowie Zusammensetzungen enthaltend Polyformale oder Copolyformale und UV-Absorber.

Weiterhin betrifft die vorliegende Erfindung ein Verfahren zur Herstellung solcher mehrschichtigen Erzeugnisse, wie Stegplatten oder Massivplatten sowie andere Erzeugnisse welche die genannte mehrschichtige Stegplatte oder Massivplatte enthalten.

Stegplatten werden beispielsweise in der Regel ein- oder zweiseitig mit UV-Coextrusionsschicht(en) auf den Außenseiten versehen, um sie vor der Schädigung (z.B. Vergilbung) durch UV-Licht zu schützen. Aber auch andere mehrschichtige Erzeugnisse werden so vor Schädigungen durch UV-Licht geschützt.

Im Folgenden wird der Stand der Technik zu mehrschichtigen Erzeugnissen zusammengefasst:

EP-A 0 110 221 offenbart Platten aus zwei Schichten Polycarbonat, wobei eine Schicht wenigstens 3 Gew.-% eines UV-Absorbers enthält. Die Herstellung dieser Platten kann gemäß EP-A 0 110 221 durch Coextrusion erfolgen.

EP-A 0 320 632 offenbart Formkörper aus zwei Schichten aus thermoplastischem Kunststoff, bevorzugt Polycarbonat, wobei eine Schicht spezielle substituierte Benzotriazole als UV-Absorber enthält. EP-A 0 320 632 offenbart auch die Herstellung dieser Formkörper durch Coextrusion.

EP-A 0 247 480 offenbart mehrschichtige Platten, in denen neben einer Schicht aus thermoplastischem Kunststoff eine Schicht aus verzweigtem Polycarbonat vorhanden ist, wobei die Schicht aus Polycarbonat spezielle substituierte Benzotriazole als UV-Absorber enthält. Die Herstellung dieser Platten durch Coextrusion wird ebenfalls offenbart.

EP-A 0 500 496 offenbart Polymerzusammensetzungen, die mit speziellen Triazinen gegen UV-Licht stabilisiert sind sowie deren Verwendung als Außenschicht in Mehrschichtsystemen. Als Polymere werden Polycarbonat, Polyester, Polyamide, Polyacetale, Polyphenylenoxid und Polyphenylensulfid genannt.

US 4,163,833 beschreibt die Herstellung zyklischer aromatischer Polyformale.

Alle aus dem Stand der Technik bekannten Produkte erreichen jedoch nicht in jeder Hinsicht, insbesondere was die Langzeitstabilität gegenüber UV-Licht betrifft, zufriedenstellende Ergebnisse.

Ausgehend vom Stand der Technik ergibt sich daher die Aufgabe, eine mehrschichtige Platte bereitzustellen, die gegenüber dem Stand der Technik verbesserte Eigenschaften, z.B. eine verbesserte Langzeitstabilität gegenüber UV-Licht, Verbesserung der Thermoalterungseigenschaften und der Hydrolysebeständigkeit zeigt.

Diese Aufgabe liegt der vorliegenden Erfindung zu Grunde.

Diese Aufgabe wird überraschenderweise durch Beschichtungen, welche bestimmte Polyformale bzw. Copolyformale als Polymerbasis enthalten gelöst.

Die Beschichtungen von Produkten auf Basis der Polyformale oder Copolyformale zeigen eine überraschende Überlegenheit gegenüber dem Stand der Technik in Bezug auf UV-Beständigkeit und insbesondere in Bezug auf die deutlich größere Hydrolysebeständigkeit.

Dies ist insbesondere deshalb überraschend, weil man die Polyformale als Vollacetale auffassen kann, welche nach gängiger Lehrmeinung des Fachmanns ein große Hydrolyseempfindlichkeit zumindest in saurer Umgebung zeigen sollten. Im Gegensatz dazu sind die Beschichtungen aus Polyformalen jedoch auch gegenüber sauren Lösungen hydrolysestabil und dies sogar bei höheren Temperaturen.

Gegenstand der vorliegenden Anmeldung sind somit Beschichtungen welche Polyformale bzw. Copolyformale der allgemeinen Formeln (1a) bzw. (1b) enthalten, 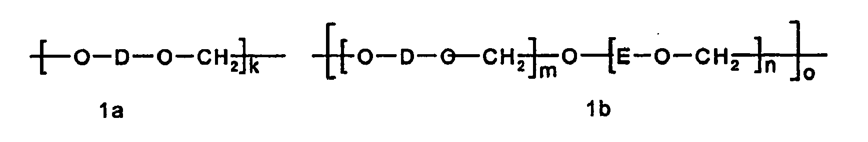 worin die Reste O-D-O und O-E-O für beliebige Diphenolatreste stehen, in denen -D- und -E-aromatische Reste mit 6 bis 40 C-Atomen, bevorzugt C₆ bis C₂₁ C-Atomen sind, die einen oder mehrere aromatische oder kondensierte, ggf Heteroatome enthaltende aromatische Kerne enthalten können und ggf. mit C₁-C₁₂-Alkylresten oder Halogen substituiert sind und aliphatische Reste, cycloaliphatische Reste, aromatische Kerne oder Heteroatome als Brückenglieder enthalten können und in denen k für eine ganze Zahl zwischen 1 und 1500, bevorzugt zwischen 2 und 1000 besonders bevorzugt zwischen 2 und 700 und ganz besonders bevorzugt zwischen 5 und 500 und insbesondere bevorzugt zwischen 5 und 300 steht, o für Zahlen zwischen 1 und 1500, bevorzugt zwischen 1 und 1000 besonders bevorzugt zwischen 1 und 700 und ganz besonders bevorzugt zwischen 1 und 500 und insbesondere bevorzugt zwischen 1 und 300 steht, und m für eine Bruchzahl z/o und n für eine Bruchzahl (o-z)/o steht wobei z für Zahlen zwischen 0 und o steht

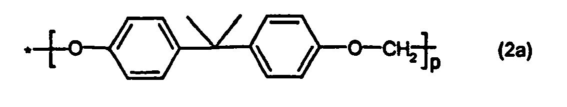

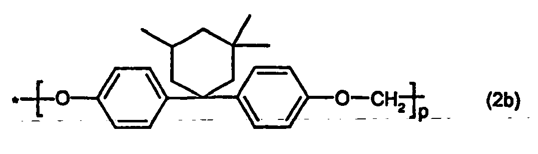

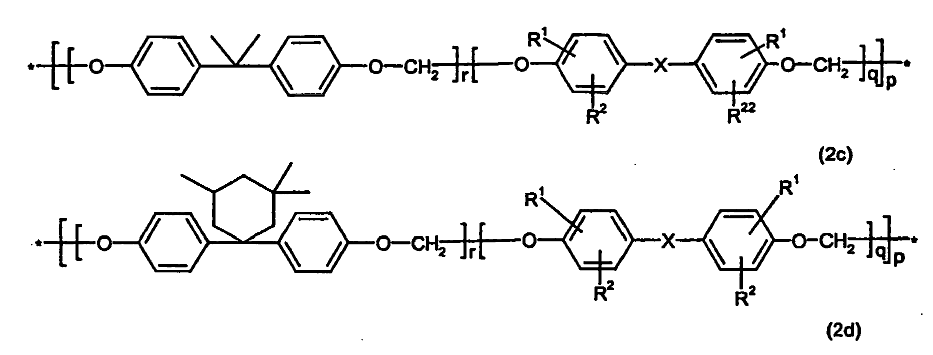

Bevorzugte Struktureinheiten der erfindungsgemäßen Polyformale und Copolyformale leiten sich von allgemeinen Strukturen der Formeln (2a), (2b), (2c) und (2d) ab, wobei die Klammer die zugrunde liegenden Diphenolatreste beschreibt, in denen R¹ und R² unabhängig voneinander für H, lineare oder verzweigte C₁-C₁₈ Alkyl- oder Alkoxyreste, Halogen wie Cl oder Br oder für einen gegebenenfalls substituierten Aryl- oder Aralkylrest, bevorzugt für H oder lineare oder verzweigte C₁-C₁₂ Alkyl-, besonders bevorzugt für H oder C₁-C₈ Alkylreste und ganz besonders bevorzugt für H oder Methyl stehen,

X für eine Einfachbindung, einen C₁- bis C₆-Alkylen-, C₂- bis C₅-Alkyliden-, C₅- bis C₆-cyloalkylidenrest, der mit C₁- bis C₆-Alkyl, vorzugsweise Methyl- oder Ethylresten substituiert sein kann, oder einen C₆- bis C₁₂-Arylenrest, der ggf. mit weiteren Heteroatome enthaltenden aromatischen Ringen kondensiert sein kann, steht, wobei p für eine ganze Zahl zwischen 1 und 1500, bevorzugt zwischen 2 und 1000, besonders bevorzugt zwischen 2 und 700 und ganz besonders bevorzugt zwischen 5 und 500 und insbesondere zwischen 5 und 300 steht. p für Zahlen zwischen 1 und 1500, bevorzugt zwischen 1 und 1000 besonders bevorzugt zwischen 1 und 700 und ganz besonders bevorzugt zwischen 1 und 500 und insbesondere bevorzugt zwischen 1 und 300 steht, und q für eine Bruchzahl z/p und r für eine Bruchzahl (p-z)/p steht wobei z für Zahlen zwischen 0 und p steht.

Besonders bevorzugt leiten sich die Bisphenolatreste in den Formeln (1) und (2) von den im Folgenden noch genannten, geeigneten Bisphenolen ab.

Beispielhaft werden für die Bisphenole, die der allgemeinen Formel (1) zugrundeliegen, Hydrochinon, Resorcin, Dihydroxybiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen, und auch α,ω-Bis-(hydroxyphenyl)-polysiloxane genannt.

Bevorzugte Bisphenole sind beispielsweise 4,4'-Dihydroxybiphenyl (DOD), 2,2-Bis-(4-hydroxyphenyl)-propan (Bisphenol A), 1,1-Bis-(4-hydroxyphenyl)-3,3,5-trimethylcyclohexan (Bisphenol TMC), 1,1-Bis-(4-hydroxyphenyl)-cyclohexan, 2,4-Bis-(4-hydroxyphenyl)-2-methylbutan, 1,1-Bis-(4-hydroxyphenyl)-1-phenylethan, 1,4-Bis[2-(4-hydroxyphenyl)2-propyl]benzol, 1,3-Bis[2-(4-hydroxyphenyl)-2-propyl]-benzol (Bisphenol M), 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 2,2-Bis-(3,5-dichlor-4-hydroxyphenyl)-propan und 2,2-Bis-(3,5-dibrom-4 hydroxyphenyl)-propan.

Besonders bevorzugte Bisphenole sind beispielsweise 2,2-Bis-(4-hydroxyphenyl)-propan (Bisphenol A), 4,4'-Dihydroxybiphenyl (DOD), 1,3-Bis[2-(4-hydroxyphenyl)-2-propyl]-benzol (Bisphenol M), 2,2-Bis-(3,5-dimethyl-4-hydroxyphenyl)-propan, 1,1-Bis-(4-hydroxyphenyl)-1-phenylethan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Ganz besonders bevorzugt sind 2,2-Bis-(4-hydroxyphenyl)-propan (Bisphenol A), 4,4'-Dihydroxybiphenyl (DOD), 1,3-Bis[2-(4-hydroxyphenyl)-2-propyl]-benzol (Bisphenol M) und 1,1-Bis-(4-hydroxyphenyl)-3,3,5-trimethylcyclohexan (Bisphenol TMC).

Die Bisphenole können sowohl allein als auch im Gemisch miteinander verwendet werden; es sind sowohl Homopolyformale als auch Copolyformale einbezogen. Die Bisphenole sind literaturbekannt oder nach literaturbekannten Verfahren herstellbar (siehe z.B. H. J. Buysch et al., Ullmann's Encyclopedia of Industrial Chemistry, VCH, New York 1991, 5. Ed., Vol. 19, p. 348).

Als Kettenabbrecher für die als Materialien in der coextrudierten Beschichtung eingesetzten Polyformale werden bevorzugt Phenole wie Phenol, Alkylphenole wie Kresol und 4-tert.-Butylphenol, Chlorphenol, Bromphenol, Cumylphenol oder deren Mischungen, in Mengen von 1-20 Mol-% bevorzugt 2-10 Mol-% je Mol Bisphenol, eingesetzt. Bevorzugt sind Phenol, 4-tert-Butylphenol bzw. Cumylphenol.

Die Herstellung von Polyformalen und Copolyformalen der Formeln (1a) und (1b) bzw. (2 a-d) geschieht beispielsweise durch ein Lösungsverfahren, dadurch gekennzeichnet, dass Bisphenole und Kettenabbrecher in einer homogenen Lösung aus Methylenchlorid oder alpha,alpha-Di-chlortoluol und einem geeigneten hochsiedenden Lösungsmittel wie beispielsweise N-Methylpyrrolidon (NMP), Dimethylformamid (DMF), Dimethylsulfoxid (DMSO), N-Methylcaprolactam (NMC), Chlorbenzol, Dichlorbenzol, Trichlorbenzol oder Tetrahydrofuran (THF) in Gegenwart einer Base, bevorzugt Natriumhydroxid oder Kaliumhydroxid, bei Temperaturen zwischen 30 und 160°C mit Methylenchlorid oder alpha,alpha-Dichlortoluol zur Reaktion gebracht werden. Bevorzugte hochsiedende Lösungsmittel sind NMP, DMF, DMSO und NMC, besonders bevorzugt NMP, NMC, DMSO und ganz besonders bevorzugt NMP und NMC. Die Reaktionsführung kann auch mehrstufig erfolgen. Die gegebenenfalls notwendige Abtrennung der cyclischen Verunreinigungen erfolgt nach Neutralwäsche der organischen Phase durch einen Fällprozess in bzw. durch einen fraktionierten Knetprozess des Rohproduktes mit einem die cyclischen Verbindungen lösenden Lösungsmittel, z.B. Aceton. Die cyclischen Verunreinigungen lösen sich nahezu vollständig im Lösungsmittel und können durch portionsweises Kneten und Wechseln des Lösungsmittels fast vollständig abgetrennt werden. Durch Einsatz von bspw. ca. 10 Litern Aceton, welches in beispielsweise 5 Portionen zu einer Polyformalmenge von ca. 6 kg zugegeben wird kann ein Gehalt an Zyklen nach Kneten deutlich unter 1 % erreicht werden.

Die zyklischen Polyformale und Copolyformale können auch durch einen Fällprozess in geeigneten Lösungsmitteln, die als Nichtlöser für das gewünschte Polymer und als Löser für die unerwünschten Zyklen fungieren, abgetrennt werden. Bevorzugt handelt es sich hierbei um Alkohole oder Ketone.

Die Reaktionstemperatur beträgt 30°C bis 160°C, bevorzugt 40°C bis 100°C besonders bevorzugt 50°C bis 80°C und ganz besonders bevorzugt 60°C bis 80°C.

Gegenstand der vorliegenden Erfindung ist auch die Verwendung der beschriebenen Polyformale und Copolyformale zur Herstellung von mehrschichtigen Erzeugnissen, bspw. Coextrudaten wie mehrschichtige Platten, diese mehrschichtigen Platten selbst und weiterhin ein Verfahren zur Herstellung dieser mehrschichtigen Platte durch Coextrusion, sowie Zusammensetzungen enthaltend diese Polyformale bzw. Copolyformale und UV-Absorber.

Weiterhin ist Gegenstand der vorliegenden Erfindung ein Erzeugnis, das die genannte mehrschichtige Platte oder andere auf Polyformalbasis beschichtete Produkte enthält. Dabei ist dieses Erzeugnis, welches bspw. die genannte mehrschichtige Platte enthält, bevorzugt ausgewählt aus der Gruppe bestehend aus Verscheibung, Gewächshaus, Wintergarten, Veranda, Carport, Bushaltestelle, Überdachung, Trennwand, Kassenhaus, Verkehrsschild, Reklametafel, Display, Lichtelement, Photovoltaikmodul und Solarkollektor.

Das erfindungsgemäße mehrschichtige Erzeugnis hat zahlreiche Vorteile. Insbesondere hat es den Vorteil, dass durch die UV-Schutzschicht auf Polyformalbasis eine deutliche Verbesserung der Langzeitbeständigkeit, insbesondere der UV- und Hydrolysebeständigkeit, erreicht wird. Außerdem ist die Platte leicht und kostengünstig herstellbar, alle Ausgangsstoffe sind verfügbar und kostengünstig. Auch die übrigen positiven Eigenschaften des Polycarbonats, zum Beispiel seine guten optischen und mechanischen Eigenschaften, werden in dem erfindungsgemäßen mehrschichtigen Erzeugnis nicht oder nur unwesentlich beeinträchtigt.

Die erfindungsgemäßen mehrschichtige Erzeugnisse haben weitere Vorteile gegenüber dem Stand der Technik. Die erfindungsgemäßen mehrschichtigen Erzeugnisse sind durch Coextrusion herstellbar. Damit ergeben sich Vorteile gegenüber einem durch Lackierung hergestellten Erzeugnis. So verdampfen bei der Coextrusion keine Lösungsmittel, wie dies bei Lackierungen der Fall ist.

Außerdem ist die Lagerungsfähigkeit von Lacken begrenzt. Diesen Nachteil hat die Coextrusion nicht.

Außerdem erfordern Lacke eine aufwendige Technik. Zum Beispiel erfordern sie explosionsgeschützte Aggregate bei der Verwendung von organischen Lösungsmitteln, das Recycling von Lösungsmitteln, und damit teure Investitionen in Anlagen. Diesen Nachteil hat die Coextrusion nicht.

Eine bevorzugte Ausführungsform der vorliegenden Erfindung ist die genannte mehrschichtige Platte, wobei die Basisschicht aus Polycarbonat und/oder Copolycarbonat und/oder Polyester und/oder Copolyester und/oder Polyestercarbonaten und/oder Polymethylmethacrylat und/oder Polyacrylaten und/oder Blends aus Polycarbonat und Polyestern und/oder Polymethylmethacrylaten und die Coex-Schicht aus Polyformalen oder Copolyformalen oder deren Blends mit (Co)Polycarbonat und/oder (Co)Polyestern besteht.

Erfindungsgemäß sind diejenigen mehrschichtigen Erzeugnis bevorzugt, bei denen die Coexschicht zusätzlich 0 bis 20 New.-% UV-Absorber enthält und 10 bis 500 *µ*m dick ist.

Die Stegplatten können Stegdoppelplatten, Stegdreifachplatten, Stegvierfachplatten usw. sein. Die Stegplatten können auch unterschiedliche Profile wie z.B. X-Profile bzw. XX-Profile besitzen. Außerdem können die Stegplatten auch gewellte Stegplatten sein.

Eine bevorzugte Ausführungsform der vorliegenden Erfindung ist eine zweischichtige Platte, bestehend aus einer Schicht aus Polycarbonat und aus einer Coexschicht aus Polyformal oder Copolyformal oder einem Polycarbonat-Polyformal-Blend.

Eine weitere bevorzugte Ausführungsform der vorliegenden Erfindung ist eine dreischichtige Platte bestehend aus einer Schicht aus Polycarbonat als Basisschicht und zwei darüber liegenden Coexschichten die jeweils gleich oder verschieden aus Polyformal oder Copolyformal oder einem Polycarbonat-Polyformal-Blend bestehen.

In einer besonderen Ausführungsform sind die mehrschichtigen Erzeugnisse transparent.

Sowohl das Basismaterial-als- auch die Coexschicht(en) in den erfindungsgemäßen mehrschichtigen Platten können Additive enthalten.

Die Coexschicht kann insbesondere UV-Absorber und Entformungsmittel enthalten.

Die UV-Absorber bzw. deren Mischungen sind dabei allgemein in Konzentrationen von 0-20 Gew.-% vorhanden. Bevorzugt sind dabei 0,1 bis 20 Gew.-%, besonders bevorzugt 2 bis 10 Gew.-%, ganz besonders bevorzugt 3 bis 8 Gew.-%. Diese Mengen gelten allgemein sind jedoch je nach UV-Absorber vom Fachmann individuell durch wenige Routineversuche zu präzisieren. Falls zwei oder mehr Coexschichten vorhanden sind, kann der Anteil an UV-Absorber in diesen Schichten auch unterschiedlich sein.

Die entsprechenden Zusammensetzungen aus Polyformalen bzw. Copolyformalen und UV-Absorbern sind ebenfalls Gegenstand der vorliegenden Anmeldung.

Die oben im Allgemeinen genannten sowie die im Folgenden für einzelne UV-Absorber genannten Konzentrationen der UV-Absorber gelten auch für diese Zusammensetzungen.

Beispiele für UV-Absorber, die erfindungsgemäß verwendet werden können, und deren bevorzugte Konzentrationen in der Beschichtung werden im Folgenden beschrieben.
a) Benzotriazol-Derivate nach Formel (I): 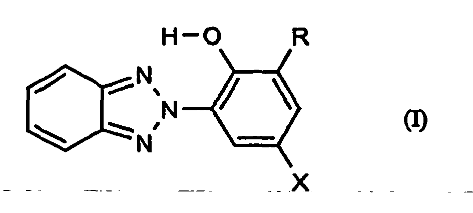 In Formel (I) sind R und X gleich oder verschieden und bedeuten H oder Alkyl oder Alkylaryl.
   Bevorzugt ist dabei Tinuvin 329 mit X = 1,1,3,3-Tetramethylbutyl und R = H
   Tinuvin 350 mit X = tert-Butyl und R = 2-Butyl
   Tinuvin 234 mit X = R = 1,1-Dimethyl-1-phenyl 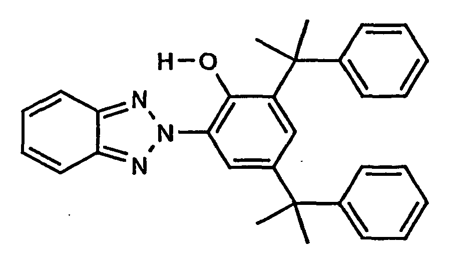 Tinuvin 234
   Vorzugsbereich: 0,00001 - 1,5 Gew-% und 2-20 Gew-%, besonders bevorzugt 0,01- 1,0 Gew-% und 3-10 Gew-%, ganz besonders bevorzugt 0,1-0,5 Gew-% und 4-8 Gew-%.
b) Dimere Benzotriazol-Derivate nach Formel (II): 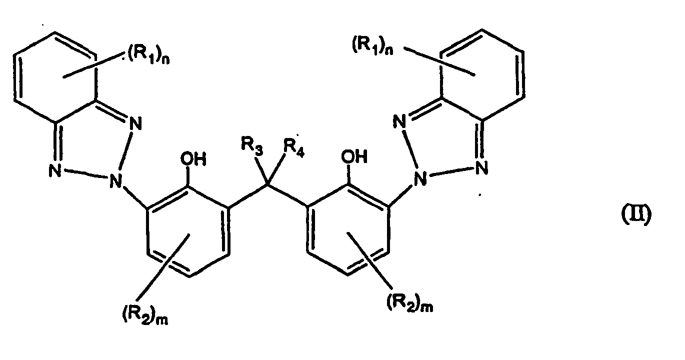 In Formel (II) sind R¹ und R²gleich oder verschieden und bedeuten H, Halogen, C₁-C₁₀₋Alkyl, C₅-C₁₀-Cycloalkyl, C₇-C₁₃-Aralkyl, C₆-C₁₄-Aryl, -OR⁵ oder -(CO)-O-R⁵ mit R⁵ = H oder C₁-C₄-Alkyl.
   In Formel (II) sind R³ und R⁴ ebenfalls gleich oder verschieden und bedeuten H, C₁-C₄-Alkyl, C₅-C₆-Cycloalkyl, Benzyl oder C₆-C₁₄-Aryl.
   In Formel (II) bedeutet m 1, 2 oder 3 und n 1, 2, 3 oder 4.
   Bevorzugt ist dabei Tinuvin 360 mit R¹ = R³ = R⁴ = H; n = 4; R² = 1,1,3,3-Tetramethylbutyl; m = 1
   Vorzugsbereiche: 0,00001-1,5 Gew-% und 2-20 Gew-%, besonders bevorzugt 0,01-1,0 Gew-% und 3-10 Gew-%, ganz besonders bevorzugt 0,1-0,5 Gew-% und 4-8 Gew-%.
b1) Dimere Benzotriazol-Derivate nach Formel (III): 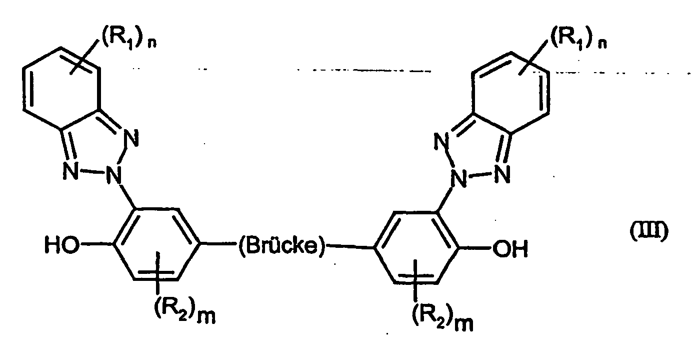 worin die Brücke 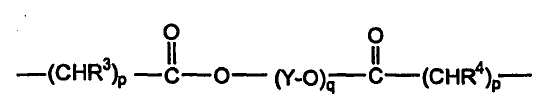 bedeutet,
   - R¹, R³, m und n: die für Formel (II) genannte Bedeutung haben, und worin
   - p: eine ganze Zahl von 0 bis 3 ist,
   - q: eine ganze Zahl von 1 bis 10 ist,
   - Y: gleich -CH₂-CH₂-, -(CH₂)₃-, -(CH₂)₄-, -(CH₂)₅-, -(CH₂)₆-
   oder CH(CH₃)-CH₂ - ist und
   - R³ und R⁴: die für Formel (II) genannte Bedeutung haben.
   Bevorzugt ist dabei Tinuvin 840 mit R¹ = H; n = 4; R² = tert-Butyl; m = 1; R² ist in ortho-Stellung zur OH-Gruppe angebracht; R³ = R⁴ = H; p = 2; Y = -(CH₂)₅-; q =1
   Vorzugsbereiche: 0,00001-1,5 Gew-% und 2-20 Gew-%, besonders bevorzugt 0,01-1,0 Gew-% und 3-10 Gew-%, ganz besonders bevorzugt 0,1-0,5 Gew-% und 4-8 Gew-%.
c) Triazin-Derivate nach Formel (IV): 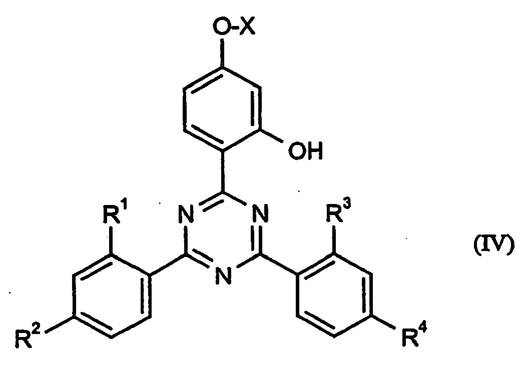 worin
   R¹, R², R³, R⁴ in Formel (IV) gleich oder verschieden sind und H oder Alkyl oder CN oder Halogen sind und X gleich Alkyl ist.
   Bevorzugt ist dabei Tinuvin 1577 mit R¹ = R² = R³ = R⁴ = H; X = Hexyl
   Cyasorb UV-1164 mit R¹ = R² = R³ = R⁴ = Methyl; X = Octyl
   Vorzugsbereiche: 0,00001-1,0 Gew-% und 1,5-10 Gew-%, besonders bevorzugt 0,01-0,8 Gew-% und 2-8 Gew-%, ganz besonders bevorzugt 0,1-0,5 Gew-% und 3-7 Gew-%.
d) Triazin-Derivate der folgenden Formel (IVa) 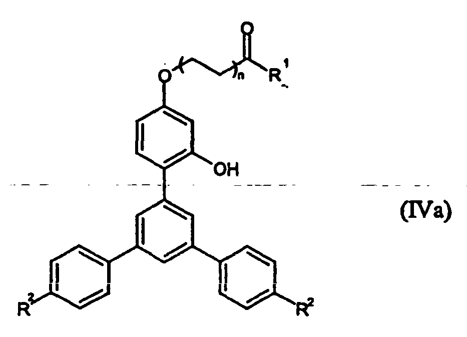 worin
   - R¹: gleich C₁-Alkyl bis C₁₇-Alkyl bedeutet,
   - R²: gleich H oder C₁-Alkyl bis C₄-Alkyl bedeutet und
   - n: gleich 0 bis 20 ist.
   Vorzugsbereiche: 0,00001-1,0 Gew-% und 1,5-10 Gew-%, besonders bevorzugt 0,01-0,8 Gew-% und 2-8 Gew-%, ganz besonders bevorzugt 0,1-0,5 Gew-% und 3-7 Gew-%.
e) Dimere Triazin-Derivate der Formel (V): 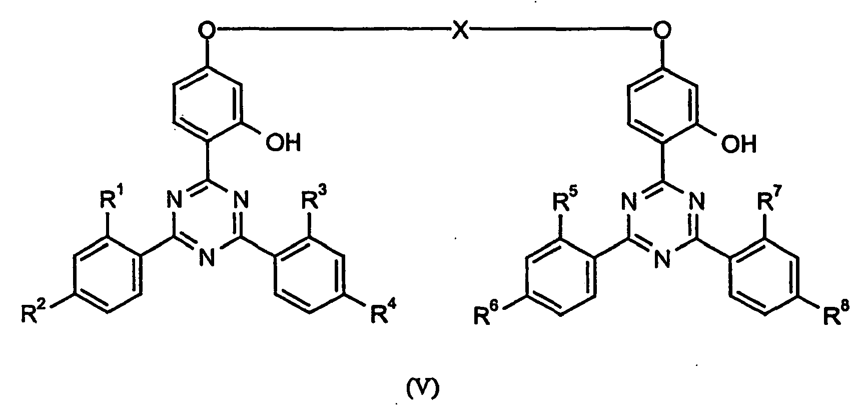 worin
   R¹, R², R³, R⁴, R⁵, R⁶, R⁷, R⁸ in Formel (V) gleich oder verschieden sein können und H oder Alkyl oder CN oder Halogen bedeuten
   und
   X gleich Alkyl oder -(CH₂CH₂-O-)ₙ-C(=O)- ist
   Vorzugsbereiche: 0,00001-1,0 Gew-% und 1,5-10 Gew-%, besonders bevorzugt 0,01-0,8 Gew-% und 2-8 Gew-%, ganz besonders bevorzugt 0,1-0,5 Gew-% und 3-7 Gew-%.
f) Diarylcyanoacrylate der Formel (VI): 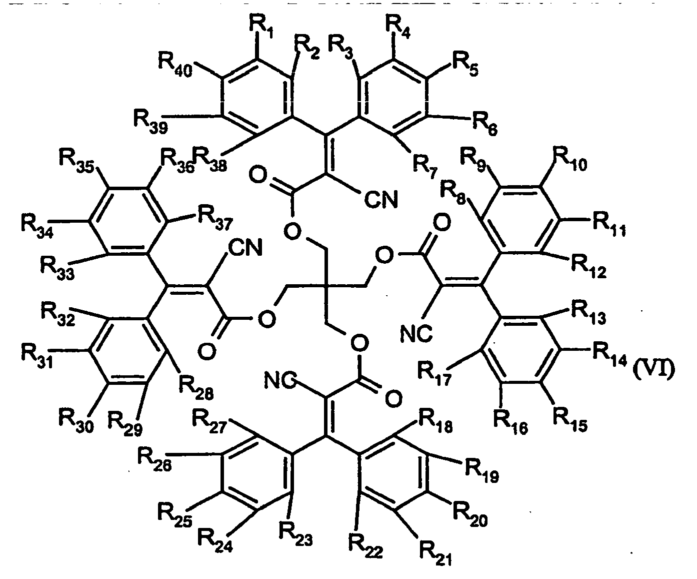 worin
   R₁ bis R₄₀ gleich oder verschieden sein können und H, Alkyl, CN oder Halogen bedeuten.
   Bevorzugt ist dabei Uvinul 3030 mit R1 bis R40 = H
   Vorzugsbereiche: 0,00001-1,5 Gew.-% und 2-20 Gew.-%, besonders bevorzugt 0,01-1,0 Gew.-% und 3-10 Gew.-%, ganz besonders bevorzugt 0,1-0,5 Gew-% und 4-8 Gew.-%.
   Ganz besonders bevorzugt sind die UV-Absorber ausgewählt aus der Gruppe bestehend aus Tinuvin 360, Tinuvin 1577 und Uvinul 3030
   Tinuvin 360: 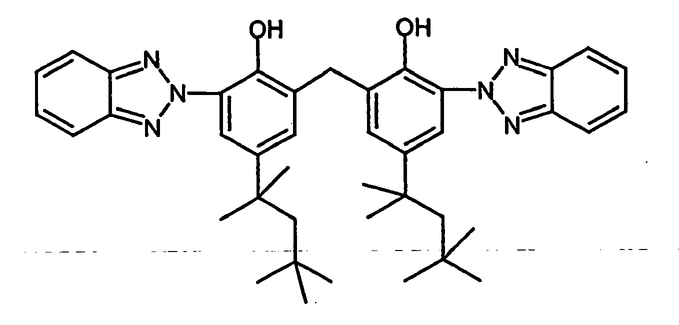 Tinuvin 1577 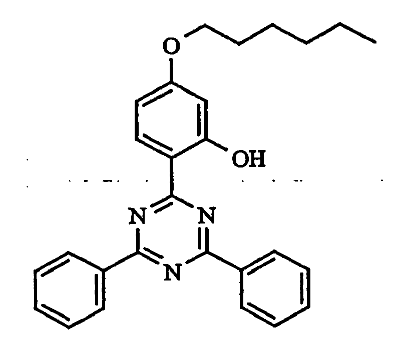 Uvinul 3030

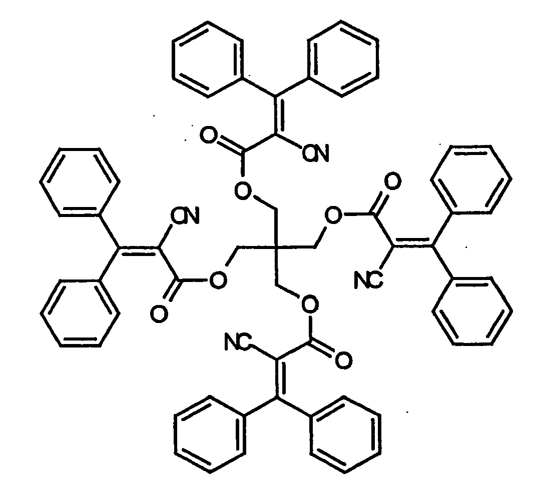

Die genannten UV-Absorber sind kommerziell erhältlich.

Zusätzlich können die Schichten neben den UV-Stabilisatoren noch andere übliche Verarbeitungshilfsmittel insbesondere Entformungsmittel und Fließmittel sowie die in Polycarbonaten üblichen Stabilisatoren insbesondere Thermostabilisatoren sowie Farbmittel und optische Aufheller und anorganische Pigmente enthalten.

Als weitere, neben den Polyformal- und Copolyformalschichten, sind, insbesondere als Basisschicht der erfindungsgemäßen mehrschichtigen Erzeugnisse, Schichten aus allen bekannten Polycarbonate geeignet.

Geeignete Polycarbonate sind bspw. Homopolycarbonate, Copolycarbonate und thermoplastische Polyestercarbonate.

Sie haben bevorzugt mittlere Molekulargewichte M̅_{w} von 18.000 bis 40.000, vorzugsweise von 26.000 bis 36.000 und insbesondere von 28.000 bis 35.000, ermittelt durch Messung der relativen Lösungsviskosität in Dichlormethan oder in Mischungen gleicher Gewichtsmengen Phenol/o-Dichlorbenzol geeicht durch Lichtstreuung.

Zur Herstellung von Polycarbonaten sei beispielhaft auf "Schnell, Chemistry and Physics of Polycarbonats, Polymer Reviews, Vol. 9, Interscience Publishers, New York, London, Sydney 1964", und auf "D.C. PREVORSEK, B.T. DEBONA and Y. KESTEN, Corporate Research Center, Allied Chemical Corporation, Moristown, New Jersey 07960, 'Synthesis of Poly(ester)carbonate Copolymers' in Journal of Polymer Science, Polymer Chemistry Edition, Vol. 19, 75-90 (1980)", und auf "D. Freitag, U. Grigo, P.R. Müller, N. Nouvertne, BAYER AG, 'Polycarbonates' in Encyclopedia of Polymer Science and Engineering, Vol. 11, Second Edition, 1988, Seiten 648-718" und schließlich auf "Dres. U. Grigo, K. Kircher und P.R. Müller 'Polycarbonate' in Becker/Braun, Kunststoff-Handbuch, Band 3/1, Polycarbonate, Polyacetale, Polyester, Celluloseester, Carl Hanser Verlag München, Wien 1992, Seiten 117-299" verwiesen.

Die Herstellung der Polycarbonate erfolgt vorzugsweise nach dem Phasengrenzflächenverfahren oder dem Schmelze-Umesterungsverfahren und wird im Folgenden beispielhaft an dem Phasengrenzflächenverfahren beschrieben.

Als Ausgangsverbindungen bevorzugt einzusetzende Verbindungen sind Bisphenole der allgemeinen Formel

HO-Z-OH,

worin
- Z: ein divalenter organischer Rest mit 6 bis 30 Kohlenstoffatomen ist, der eine oder mehrere aromatische Gruppen enthält.

Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis(hydroxyphenyl)-sulfone, Bis(hydroxyphenyl)ketone und α,α'- Bis(hydroxyphenyl)- diisopropylbenzole gehören.

Besonders bevorzugte Bisphenole, die zu den vorgenannten Verbindungsgruppen gehören, sind Bisphenol-A, Tetraalkylbisphenol-A, 1,3-Bis-[2-(4-hydroxyphenyl)-2-propyl]benzol (Bisphenol M), 1,1-Bis-[2-(4-hydroxyphenyl)-2-propyl]benzol, 1,1-Bis-(4-hydroxyphenyl)-3,3,5-trimethylcyclohexan (BP-TMC) sowie gegebenenfalls deren Gemische.

Bevorzugt werden die erfindungsgemäß einzusetzenden Bisphenolverbindungen mit Kohlensäureverbindungen, insbesondere Phosgen, oder beim Schmelzeumesterungsprozess mit Diphenylcarbonat bzw. Dimethylcarbonat, umgesetzt.

Polyestercarbonate werden bevorzugt durch Umsetzung der bereits genannten Bisphenole, mindestens einer aromatischen Dicarbonsäure und gegebenenfalls Kohlensäureäquivalente erhalten. Geeignete aromatische Dicarbonsäuren sind beispielsweise Phthalsäure, Terephthalsäure, Isophthalsäure, 3,3'- oder 4,4'-Diphenyldicarbonsäure und Benzophenondicarbonsäuren. Ein Teil, bis zu 80 Mol.-%, vorzugsweise von 20 bis 50 Mol-% der Carbonatgruppen in den Polycarbonaten können durch aromatische Dicarbonsäureester-Gruppen ersetzt sein.

Beim Phasengrenzflächenverfahren verwendete inerte organische Lösungsmittel sind beispielsweise Dichlormethan, die verschiedenen Dichlorethane und Chlorpropanverbindungen, Tetrachlormethan, Trichlormethan, Chlorbenzol und Chlortoluol, vorzugsweise werden Chlorbenzol oder Dichlormethan bzw. Gemische aus Dichlormethan und Chlorbenzol eingesetzt.

Die Phasengrenzflächenreaktion kann durch Katalysatoren wie tertiäre Amine, insbesondere N-Alkylpiperidine oder Oniumsalze beschleunigt werden. Bevorzugt werden Tributylamin, Triethylamin und N-Ethylpiperidin verwendet. Im Falle des Schmelzeumesterungsprozesses werden bevorzugt die in DE-A 423 8123 genannten Katalysatoren verwendet.

Die Polycarbonate können durch den Einsatz geringer Mengen Verzweiger bewusst und kontrolliert verzweigt werden. Einige geeignete Verzweiger sind: Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5 Tri-(4-hydroxyphenyl)-benzol; 1,1,1-Tri-(4-hydroxyphenyl)-ethan; Tri-(4-hydroxyphenyl)-phenylmethan; 2,2-Bis-[4,4-bis-(4-hydroxyphenyl)-cyclohexyl]-propan; 2,4-Bis-(4-hydroxyphenylisopropyl)-phenol; 2,6-Bis-(2-hydroxy-5'-methyl-benzyl)-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; α, α', α"-Tris-(4-hydroxyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere 1,1,1-Tri-(4-hydroxyphenyl)-ethan und Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern bzw. Mischungen der Verzweigern, können mit den Diphenolen zusammen eingesetzt, aber auch in einem späteren Stadium der Synthese zugegeben werden.

Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet in Mengen von 1-20 Mol-% bevorzugt 2-10 Mol-% je Mol Bisphenol. Bevorzugt sind Phenol, 4-term.-Butylphenol bzw. Cumylphenol.

Kettenabbrecher und Verzweiger können getrennt oder aber auch zusammen mit dem Bisphenol den Synthesen zugesetzt werden.

Die Herstellung der Polycarbonate nach dem Schmelzeumesterungsprozess ist in DE-A 42 38 123 beispielhaft beschrieben.

Bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan und die Copolycarbonate auf Basis der beiden Monomere Bisphenol A und 4,4'-Dihydroxydiphenyl (DOD).

Das Homopolycarbonat auf Basis von Bisphenol A ist besonders bevorzugt.

Alle in den erfindungsgemäßen Erzeugnissen verwendeten Thermoplasten können Stabilisatoren enthalten. Geeignete Stabilisatoren sind beispielsweise Phosphine, Phosphite oder Si enthaltende Stabilisatoren und weitere in EP-A 0 500 496 beschriebene Verbindungen. Beispielhaft seien Triphenylphosphite, Diphenylalkylphosphite, Phenyldialkylphosphite, Tris-(nonylphenyl)phosphit, Tetrakis-(2,4-di-tert.-butylphenyl)-4,4'-biphenylen-diphosponit und Triarylphosphit genannt. Besonders bevorzugt sind Triphenylphosphin und Tris-(2,4-di-tert.-butylphenyl)phosphit.

Diese Stabilisatoren können in allen Schichten der erfindungsgemäßen mehrschichtigen Platte vorhanden sein. Also sowohl in der sogenannten Basis als auch in der oder in den sogenannten Coexschichten. In jeder Schicht können unterschiedliche Additive bzw. Konzentrationen an Additiven vorhanden sein.

Ferner kann die erfindungsgemäße mehrschichtige Platte 0,01 bis 0,5 Gew.-% der Ester oder Teilester von ein- bis sechswertigen Alkoholen, insbesondere des Glycerins, des Pentaerythrits oder von Guerbetalkoholen enthalten.

Einwertige Alkohole sind beispielsweise Stearylalkohol, Palmitylalkohol und Guerbetalkohole.

Ein zweiwertiger Alkohol ist beispielsweise Glycol.

Ein dreiwertiger Alkohol ist beispielsweise Gylcerin.

Vierwertige Alkohole sind beispielsweise Pentaerythrit und Mesoerythrit

Fünfwertige Alkohole sind beispielsweise Arabit, Ribit und Xylit.

Sechswertige Alkohole sind beispielsweise Mannit, Glucit (Sorbit) und Dulcit.

Die Ester sind bevorzugt die Monoester, Diester, Triester, Tetraester, Pentaester und Hexaester oder deren Mischungen, insbesondere statistische Mischungen, aus gesättigten, aliphatischen C₁₀ bis C₃₆-Monocarbonsäuren und gegebenenfalls Hydroxy-Monocarbonsäuren, vorzugsweise mit gesättigten, aliphatischen C₁₄ bis C₃₂-Monocarbonsäuren und gegebenenfalls Hydroxy-Monocarbonsäuren.

Die kommerziell erhältlichen Fettsäureester, insbesondere des Pentaerythrits und des Glycerins, können herstellungsbedingt <60% unterschiedlicher Teilester enthalten.

Gesättigte, aliphatische Monocarbonsäuren mit 10 bis 36 C-Atomen sind beispielsweise Caprinsäure, Laurinsäure, Myristinsäure, Palmitinsäure, Stearinsäure, Hydroxystearinsäure, Arachinsäure, Behensäure, Lignocerinsäure, Cerotinsäure und Montansäuren.

Bevorzugte gesättigte, aliphatische Monocarbonsäuren mit 14 bis 22 C-Atomen sind beispielsweise Myristinsäure, Palmitinsäure, Stearinsäure, Hydroxystearinsäure, Arachinsäure und Behensäure.

Besonders bevorzugt sind gesättigte, aliphatische Monocarbonsäuren wie Palmitinsäure, Stearinsäure und Hydroxystearinsäure.

Die gesättigten, aliphatischen C₁₀ bis C₃₆-Carbonsäuren und die Fettsäureester sind als solche entweder literaturbekannt oder nach literaturbekannten Verfahren herstellbar. Beispiele für Pentaerythritfettsäureester sind die der besonders bevorzugten, vorstehend genannten Monocarbonsäuren.

Besonders bevorzugt sind Ester des Pentaerythrits und des Glycerins mit Stearinsäure und Palmitinsäure.

Besonders bevorzugt sind auch Ester von Guerbetalkoholen und des Glycerins mit Stearinsäure und Palmitinsäure und gegebenenfalls Hydroxystearinsäure.

Diese Ester können sowohl in der Basis als auch in der oder in den Coexschichten vorhanden sein. In jeder Schicht können unterschiedliche Additive bzw. Konzentrationen vorhanden sein.

Die erfindungsgemäßen mehrschichtigen Platten können Antistatika enthalten.

Beispiele für Antistatika sind kationaktive Verbindungen, beispielsweise quartäre Ammonium-, Phosphonium- oder Sulfoniumsalze, anionaktive Verbindungen, beispielsweise Alkylsulfonate, Alkylsulfate, Alkylphosphate, Carboxylate in Form von Alkali- oder Erdalkalimetallsalzen, nichtionogene Verbindungen, beispielsweise Polyethylenglykolester, Polyethylenglykolether, Fettsäureester, ethoxylierte Fettamine. Bevorzugte Antistatika sind nichtionogene Verbindungen.

Diese Antistatika können sowohl in der Basis als auch in der oder in den Coexschichten vorhanden sein. In jeder Schicht können unterschiedliche Additive bzw. Konzentrationen vorhanden sein. Sie werden bevorzugt in der oder in den Coex-Schichten verwendet.

Die erfindungsgemäßen mehrschichtigen Platten können organische Farbstoffe, anorganische Farbpigmente, Fluoreszenzfarbstoffe und besonders bevorzugt optische Aufheller enthalten.

Diese Farbmittel können sowohl in der Basis als auch in der oder in den Coexschichten vorhanden sein. In jeder Schicht können unterschiedliche Additive bzw. Konzentrationen vorhanden sein.

Alle für die Herstellung der erfindungsgemäßen mehrschichtigen Platte verwandten Formmassen, deren Einsatzstoffe und Lösungsmittel können aus ihrer Herstellung und Lagerung mit entsprechenden Verunreinigungen kontaminiert sein, wobei es das Ziel ist, mit so sauberen Ausgangsstoffen wie möglich zu arbeiten.

Das Vermischen der einzelnen Bestandteile in den Formmassen kann in bekannter Weise sowohl sukzessive als auch simultan erfolgen und zwar sowohl bei Raumtemperatur als auch bei erhöhter Temperatur.

Die Einarbeitung der Zusätze in die Formmassen für die erfindungsgemäßen Platten insbesondere der UV-Absorber und weiterer vorgenannter Additive erfolgt bevorzugt in bekannter Weise durch Vermischen von Polymergranulat mit den Zusätzen bei Temperaturen von etwa 200 bis 330°C in üblichen Aggregaten wie Innenknetern, Einschneckenextrudern und Doppelwellenextrudern beispielsweise durch Schmelzecompoundierung oder Schmelzeextrusion oder durch Vermischen der Lösungen des Polymers mit Lösungen der Additive und anschließende Verdampfung der Lösungsmittel in bekannter Weise. Der Anteil der Additive in der Formmasse kann in weiten Grenzen variiert werden und richtet sich nach den gewünschten Eigenschaften der Formmasse. Der Gesamtanteil der Additive in der Formmasse beträgt bevorzugt etwa bis zu 20 Gew.-%, vorzugsweise 0,2 bis 12 Gew.-%, bezogen auf das Gewicht der Formmasse.

Die Einarbeitung der UV-Absorber in die Formmassen kann beispielsweise auch geschehen durch Vermischen von Lösungen der UV-Absorber und gegebenenfalls weiterer vorgenannter Additive mit Lösungen der Kunststoffe in geeigneten organischen Lösungsmitteln wie CH₂Cl₂, Halogenalkanen, Halogenaromaten, Chlorbenzol und Xylolen. Die Substanzgemische werden dann bevorzugt in bekannter Weise via Extrusion homogenisiert; die Lösungsgemische werden bevorzugt in bekannter Weise durch Ausdampfen des Lösungsmittels und anschließender Extrusion entfernt, beispielsweise compoundiert.

Die Bearbeitung der erfindungsgemäßen mehrschichtigen Platten z.B. durch Tiefziehen oder durch Oberflächenbearbeitungen, wie z.B. Ausrüstung mit Kratzfestlacken, wasserspreitenden Schichten und ähnliches sind möglich und die durch diese Verfahren hergestellten Erzeugnisse sind ebenfalls Gegenstand der vorliegenden Erfindung.

Die Coextrusion als solche ist literaturbekannt (siehe beispielsweise EP-A 0 110 221 und EP-A 0 110 238). Im vorliegenden Fall wird vorzugsweise wie folgt verfahren. An einem Coextrusionsadapter sind Extruder zur Erzeugung der Kernschicht und Deckschicht(en) angeschlossen. Der Adapter ist so konstruiert, dass die die Deckschicht(en) formende Schmelze als dünne Schicht haftend auf die Schmelze der Kernschicht aufgebracht werden. Der so erzeugte mehrschichtige Schmelzestrang wird dann in der anschließend angeschlossenen Düse in die gewünschte Form (Steg- oder Massivplatte) gebracht. Anschließend wird in bekannter Weise mittels Kalandrierung (Massivplatte) oder Vakuumkalibrierung (Stegplatte) die Schmelze unter kontrollierten Bedingungen abgekühlt und anschließend abgelängt. Gegebenenfalls kann nach der Kalbrierung ein Temperofen zur Eliminierung von Spannungen angebracht werden. Anstelle des vor der Düse angebrachten Adapters kann auch die Düse selbst so ausgelegt sein, dass dort die Zusammenführung der Schmelzen erfolgt.

Die Erfindung wird durch die folgenden Beispiele weiter erläutert ohne auf diese beschränkt zu sein. Die erfindungsgemäßen Beispiele geben lediglich bevorzugte Ausführungsformen der vorliegenden Erfindung wider.

### Beispiele

### Beispiel 1

### Synthese des Homopolyformals aus Bisphenol TMC:

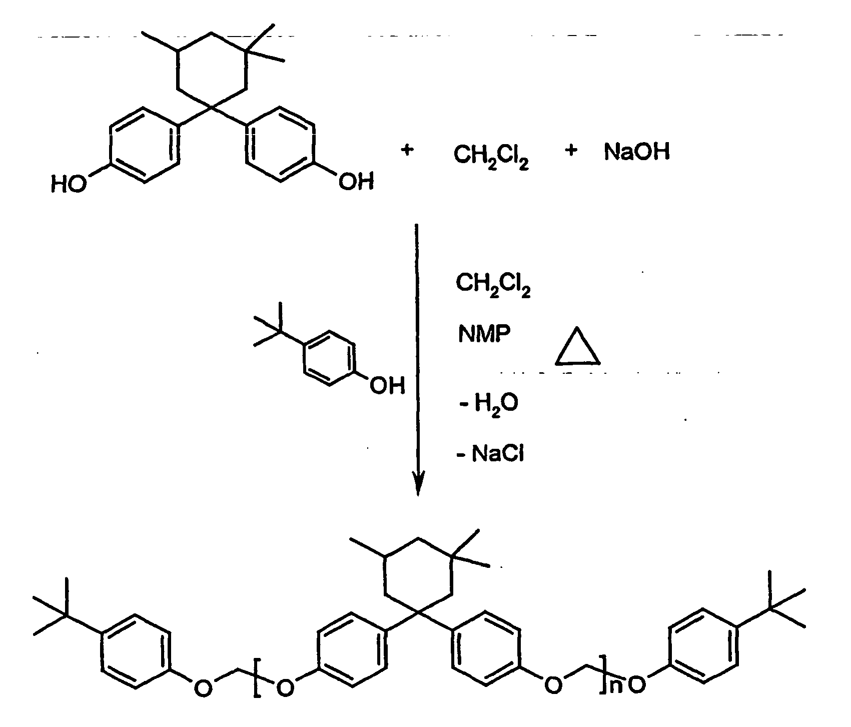

7 kg (22,55 mol) Bisphenol TMC, 2,255 kg (56,38 mol) Natriumhydroxid-Plätzchen und 51,07 g (0,34 mol) fein gemörsertes p-tert-Butylphenol (Aldrich) in 500 ml Methylenchlorid werden zu einem Lösungsmittelgemisch aus 28,7 kg Methylenchlorid und 40,18 kg N-Methyl-2-pyrrolidon (NMP) unter Rühren und Stickstoffschutzgas hinzugegeben. Nach Homogenisierung wird auf Rückfluß (78°C) aufgeheizt und eine Stunde lang bei dieser Temperatur gerührt. Nach dem Abkühlen bis auf 25°C wird der Reaktionsansatz mit 351 Methylenchlorid und 20 1 entmineralisiertem Wasser verdünnt. In einem Separator wird der Ansatz mit Wasser neutral und salzfrei (Leitfähigkeit < 15 µS.cm⁻¹) gewaschen. Die organische Phase aus dem Separator wird abgetrennt und in einem Eindampfkessel der Lösungsmittelaustausch Methylenchlorid gegen Chlorbenzol vorgenommen. Anschließend erfolgt die Extrusion des Materials über einen Ausdampfextruder ZSK 32 bei einer Temperatur von 270°C mit abschließender Granulierung. Diese Syntheseprozedur wird 2-mal durchgeführt. Dabei erhält man nach dem Verwerfen von Vorlaufmaterial insgesamt 9,85 kg Polyformal als transparentes Granulat. Dieses enthält noch niedermolekulare cyclische Formale als Verunreinigung. Das Material wird auf zwei Teile aufgeteilt und jeweils mit ca. 5 l Aceton über Nacht angequollen. Die erhaltenen Massen werden mit mehreren Portionen frischem Aceton solange geknetet, bis keine Cyclen mehr nachgewiesen werden können. Nach Vereinigen des aufgereinigten Materials und Auflösen in Chlorbenzol wird nochmals bei 280 °C über den Ausdampfextruder extrudiert. Dabei erhält man nach dem Verwerfen von Vorlaufmaterial insgesamt 7,31 kg Polyformal als transparentes Granulat.

### Analytik:

- Molekulargewicht Mw = 38345, Mn = 20138, D = 1,90 nach GPC (Eichung gegen Polycarbonat).
- Glastemperatur Tg = 170,8°C
- Relative Lösungsviskosität in Methylenchlorid (0,5 g/100 ml Lösung) = 1,234
- Nachweis der Cyclenfreiheit des Polymers durch GPC (Oligomere im niedermolekularen Bereich), sowie MALDI-TOF (Molmasse der Cyclen im Vergleich zur Molmasse der offenkettigen Analoga)

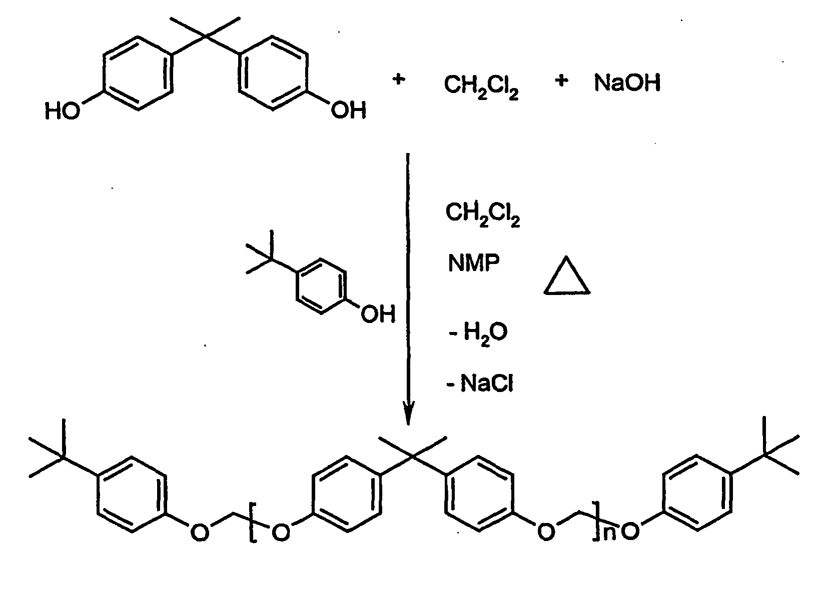

### Beispiel 2

### Homopolyformal aus Bisphenol A:

7 kg (30,66 mol) Bisphenol A (Bayer AG), 3,066 kg (76,65 mol) Natriumhydroxid-Plätzchen und 69,4 g (0,462 mol) fein gemörsertes p-tert-Butylphenol (Aldrich) in 500 ml Methylenchlorid werden zu einem Lösungsmittelgemisch aus 28,7 kg Methylenchlorid und 40,18 kg N-Methyl-2-pyrrolidon (NMP) unter Rühren und Stickstoffschutzgas hinzugegeben. Nach Homogenisierung wird auf Rückfluß (78°C) aufgeheizt und eine Stunde lang bei dieser Temperatur gerührt. Nach dem Abkühlen bis auf 25°C wird der Reaktionsansatz mit 201 Methylenchlorid und 201 entmineralisiertem Wasser verdünnt. In einem Separator wird der Ansatz mit Wasser neutral und salzfrei (Leitfähigkeit < 15 µS.cm⁻¹) gewaschen. Die organische Phase aus dem Separator wird abgetrennt und in einem Eindampfkessel der Lösungsmittelaustausch Methylenchlorid gegen Chlorbenzol vorgenommen. Anschließend erfolgt die Extrusion des Materials über einen Ausdampfextruder ZSK 32 bei einer Temperatur von 200°C mit abschließender Granulierung. Diese Syntheseprozedur wird 2-mal durchgeführt. Dabei erhält man nach dem Verwerfen von Vorlaufmaterial insgesamt 11,99 kg Polyformal als transparentes Granulat.

### Analytik:

- Molekulargewicht Mw = 31732, Mn = 3465 nach GPC (Eichung gegen Polycarbonat). Hierbei wurden die Zyklen nicht abgetrennt. Ein Anquellen des Materials mit Aceton ist nicht möglich, wodurch das Abtrennen der Zyklen ebenfalls nicht möglich ist.
- Glastemperatur Tg = 89°C
- Relative Lösungsviskosität in Methylenchlorid (0,5 g/100 ml Lösung) = 1,237/1,239 (Doppelbestimmung)

### Beispiel 3

### Synthese des Copolyformals aus Bisphenol TMC und Bisphenol A

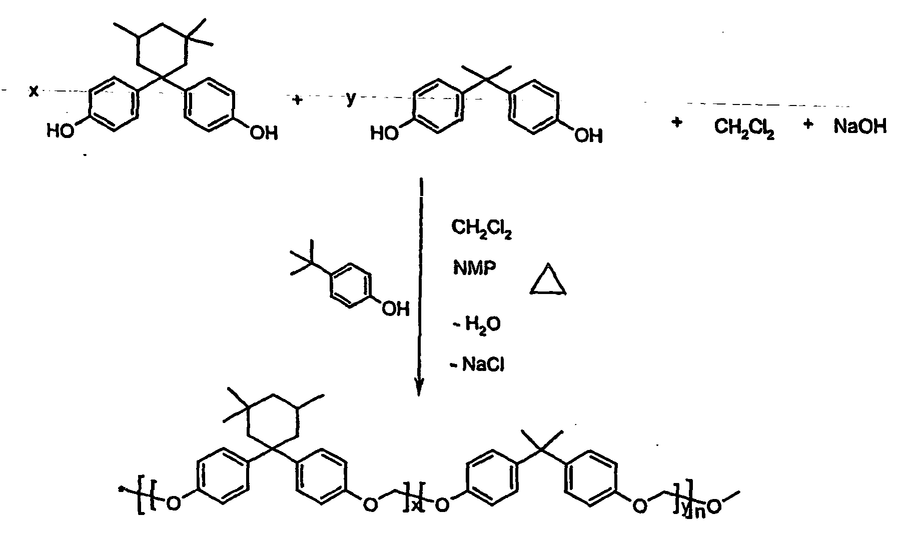

5,432 kg (17,5 mol) Bisphenol TMC (x=70 mol-%), 1,712 kg (7,5 mol) Bisphenol A (y=30 mol-%), 2,5 kg (62,5 mol) Natriumhydroxid-Plätzchen und 56,33 g (0,375 mol) fein gemörsertes p-tert-Butylphenol (Aldrich) in 500 ml Methylenchlorid werden zu einem Lösungsmittelgemisch aus 28,7 kg Methylenchlorid und 40,18 kg N-Methyl-2-pyrrolidon (NMP) unter Rühren und Stickstoffschutzgas hinzugegeben. Nach Homogenisierung wird auf Rückfluß (78°C) aufgeheizt und eine Stunde lang bei dieser Temperatur gerührt. Nach dem Abkühlen bis auf 25°C wird der Reaktionsansatz mit 351 Methylenchlorid und 20 entmineralisiertem Wasser verdünnt. In einem Separator wird der Ansatz mit Wasser neutral und salzfrei (Leitfähigkeit < 15 µS.cm⁻¹) gewaschen. Die organische Phase aus dem Separator wird abgetrennt und in einem Eindampfkessel der Lösungsmittelaustausch Methylenchlorid gegen Chlorbenzol vorgenommen. Anschließend erfolgt die Extrusion des Materials über einen Ausdampfextruder ZSK 32 bei einer Temperatur von 280°C mit abschließender Granulierung. Dabei erhält man nach dem Verwerfen von Vorlaufmaterial insgesamt 5,14 kg Copolyformal als transparentes Granulat. Dieses enthält noch niedermolekulare Cyclen als Verunreinigung. Das Material wird mit ca. 5 l Aceton über Nacht angequollen. Die erhaltenen Masse wird mit mehreren Portionen frischem Aceton solange geknetet, bis keine Cyclen mehr nachgewiesen werden können. Das aufgereinigte Material wird in Chlorbenzol aufgelöst und nochmals bei 270°C über den Ausdampfextruder extrudiert. Dabei erhält man nach dem Verwerfen von Vorlaufmaterial 3,11 kg Polyformal als transparentes Granulat.

### Analytik:

- Molekulargewicht Mw = 39901, Mn = 19538, D = 2,04 nach GPC (Eichung gegen Polycarbonat).
- Glastemperatur Tg =148,2°C
- Relative Lösungsviskosität in Methylenchlorid (0,5 g/100 ml Lösung) = 1,244/1,244 (Granulat)
- ¹H-NMR in CDCl₃ zeigt das erwartete Einbauverhältnis = 0,7/0,3 der Monomere TMC/BPA (Integral der chemischen Verschiebungen von cyclischen Aliphatgruppen (TMC) zu Methylgruppen (BPA))

### Beispiel 4:

### Synthese des Copolyformals aus Bisphenol TMC und 4,4'-Dihydroxybiphenyl (DOD)

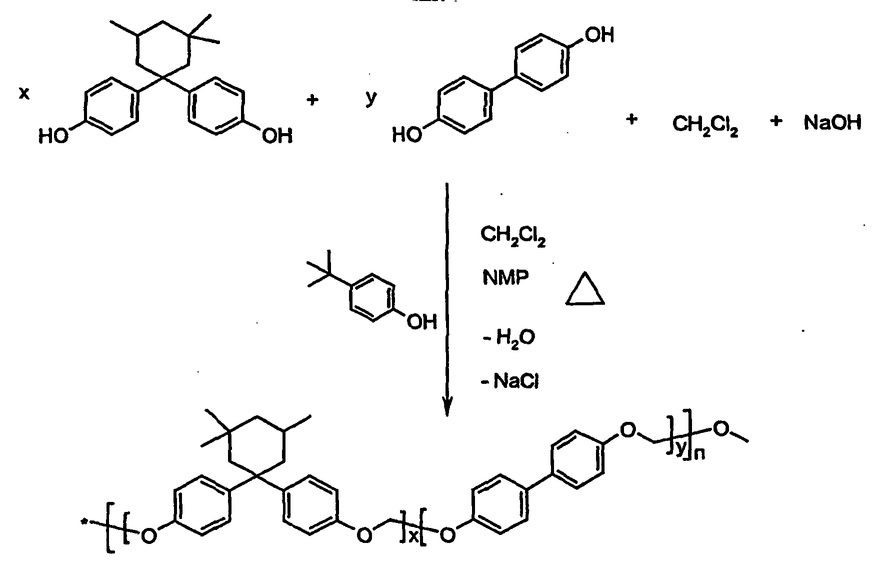

3,749 kg (12,07 mol) Bisphenol TMC (x=90 mol-%), 0,2497 kg (1,34 mol) 4,4'-Dihydroxybiphenyl (DOD) (y=10 mol-%), 1,339 kg (33,48 mol) Natriumhydroxid-Plätzchen und 20,12 g (0,134 mol) fein gemörsertes p-tert-Butylphenol (Aldrich) in 200 ml Methylenchlorid werden zu einem Lösungsmittelgemisch aus 12,01 Methylenchlorid und 22,25 kg N-Methyl-2-pyrrolidon (NMP) unter Rühren und Stickstoffschutzgas hinzugegeben. Nach Homogenisierung wird auf Rückfluß (78°C) aufgeheizt und eine Stunde lang bei dieser Temperatur gerührt. Nach dem Abkühlen bis auf 25°C wird der Reaktionsansatz mit 35 l Methylenchlorid und 20 l entmineralisiertem Wasser verdünnt. In einem Separator wird der Ansatz mit Wasser neutral und salzfrei (Leitfähigkeit < 15 µS.cm⁻¹) gewaschen. Die organische Phase aus dem Separator wird abgetrennt und in einem Eindampfkessel der Lösungsmittelaustausch Methylenchlorid gegen Chlorbenzol vorgenommen. Anschließend erfolgt die Extrusion des Materials über einen Ausdampfextruder ZSK 32 bei einer Temperatur von 280°C mit abschließender Granulierung. Dabei erhält man nach dem Verwerfen von Vorlaufmaterial insgesamt 2,62 kg Copolyformal als transparentes Granulat. Dieses enthält noch niedermolekulare Cyclen als Verunreinigung. Das Material wird mit ca. 5 l Aceton über Nacht angequollen. Die erhaltenen Masse wird mit mehreren Portionen frischem Aceton solange geknetet, bis keine Cyclen mehr nachgewiesen werden können. Das aufgereinigte Material wird in Chlorbenzol aufgelöst und nochmals bei 240°C über den Ausdampfextruder extrudiert. Dabei erhält man nach dem Verwerfen von Vorlaufmaterial das Polyformal als transparentes Granulat.

### Analytik:

- Molekulargewicht Mw = 44287, Mn = 17877, D = 2,48 nach GPC (Eichung gegen Polycarbonat).
- Glastemperatur Tg =167 °C

### Beispiel 5:

### Synthese des Copolyformals aus Bisphenol A und 4,4'-Dihydroxybiphenyl (DOD)

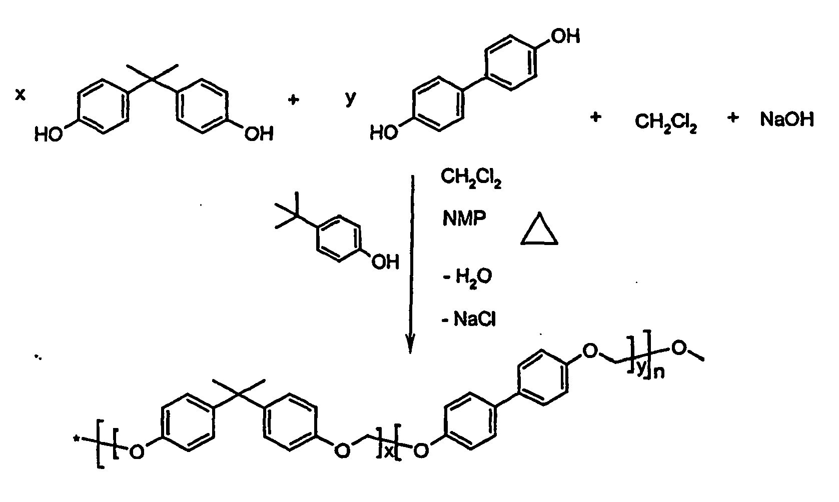

22,37 g (0,0098 mol) Bisphenol A (x=70 mol-%), 7,82 g (0,0042 mol) 4,4'-Dihydroxybiphenyl (DOD) (y=30 mol-%), 14,0 g (0,35 mol) Natriumhydroxid-Plätzchen und 0,21 g (0,0014 mol) fein gemörsertes p-tert-Butylphenol (Aldrich) werden zu einem Lösungsmittelgemisch aus 125 ml Methylenchlorid und 225 ml N-Methyl-2-pyrrolidon (NMP) unter Rühren und Stickstoffschutzgas hinzugegeben. Nach Homogenisierung wird auf Rückfluß (78°C) aufgeheizt und eine Stunde lang bei dieser Temperatur gerührt. Nach dem Abkühlen bis auf 25°C wird der Reaktionsansatz mit Methylenchlorid und entmineralisiertem Wasser verdünnt. Und anschließend mit Wasser neutral und salzfrei (Leitfähigkeit <15 µS.cm⁻¹) gewaschen. Die organische Phase wird abgetrennt. Die Isolierung des Polymers erfolgt durch Ausfällen in Methanol. Nach dem Waschen des Produktes mit Wasser und Methanol und Trocknung bei 80°C erhält man das Polyformal als weiße Polymerfäden.

### Analytik:

- Molekulargewicht Mw = 19057, Mn = 4839, D = 3,94 nach GPC (Eichung gegen Polycarbonat).

### Beispiel 6:

### Hydrolysetest des BPA-Polyformals aus Beispiel 2

Der Hydrolysetest erfolgt durch Belastung mit folgenden Hydrolysemedien/Temperaturbedingungen und zeitabhängiger Ermittlung der Molekulargewichtsveränderung durch Messung der relativen Lösungsviskosität in Methylenchlorid (0,5 g/100 ml Lösung):

| | |
|---|---|
| Hydrolysemedium: | 0,1 N HCI / 80°C |
| | 0,1 N NaOH / 80°C |
| | dest. Wasser / ca. 100°C |

Es ergeben sich folgende Ergebnisse bis zu einer Gesamtbelastungsdauer von 21 Tagen (jeweils Mehrfachbestimmungen):
a) Hydrolysemedium: 0,1 N HCl / 80°C

| Zeit [Tage] | relative Lösungsviskosität ηᵣₑₗ |
|---|---|
| 0 | 1,237 / 1,239 (Nullprobe) |
| 7 | 1,237 / 1,238 / 1,236 / 1,237 / 1,237 / 1,238 |
| 14 | 1,237 / 1,237 / 1,236 / 1,237 / 1,237 / 1,237 |
| 21 | 1,236 / 1,239 / 1,235 / 1,236 / 1,235 / 1,235 |

a) Hydrolysemedium: 0,1 N NaOH / 80°C

| Zeit [Tage] | relative Lösungsviskosität ηᵣₑₗ |
|---|---|
| 0 | 1,237 / 1,239 (Nullprobe) |
| 7 | 1,237 / 1,238 / 1,237 / 1,237 / 1,236 / 1,237 |
| 14 | 1,237 / 1,237 / 1,236 / 1,236 / 1,236 / 1,236 |
| 21 | 1,236 / 1,236 / 1,236 / 1,236 / 1,236 / 1,235 |

a) Hydrolysemedium: destilliertes Wasser / ca. 100°C

| Zeit [Tage] | relative Lösungsviskosität ηᵣₑₗ |
|---|---|
| 0 | 1,237 / 1,239 (Nullprobe) |
| 7 | 1,238 / 1,237 / 1,238 / 1,237 / 1,237 / 1,237 |
| 14 | nicht gemesen |
| 21 | 1,238 / 1,237 / 1,237 / 1,237 / 1,237 / 1,235 |

### Beispiel 7:

### Hydrolysetest des TMC/BPA-Copolyformals (70/30) aus Beispiel 3

Der Hydrolysetest erfolgt durchBelastung mit folgenden Hydrolysemedien/Temperaturbedingungen und :zeitabhängiger Ermittlung der Molekulargewichts-veränderung durch Messung der relativen Lösungsviskosität in Methylenchlorid (0,5 g/100 ml Lösung):

| | |
|---|---|
| Hydrolysemedium: | 0,1 N HCl / 80°C |
| | 0,1 N NaOH / 80°C |
| | dest. Wasser / ca. 100°C |

Es ergeben sich folgende Ergebnisse bis zu einer Gesamtbelastungsdauer von 21 Tagen (jeweils Mehrfachbestimmungen):
a) Hydrolysemedium: 0,1 N HCl / 80°C

| Zeit [Tage] | relative Lösungsviskosität ηᵣₑₗ |
|---|---|
| 0 | 1,242 / 1,242 (Nullprobe; nach Verspritzen zum 80x10x4-Stab) |
| 7 | 1,242 / 1,242 / 1,243 / 1,243 / 1,242 / 1,243 |
| 14 | 1,240 / 1,241 / 1,240 /1,242 / 1,241 / 1,241 |
| 21 | 1,243 / 1,243 / 1,243 / 1,242 / 1,243 / 1,243 |

a) Hydrolysemedium: 0,1 N NaOH / 80°C

| Zeit [Tage] | relative Lösungsviskosität ηᵣₑₗ |
|---|---|
| 0 | 1,242 / 1,242 (Nullprobe) |
| 7 | 1,243/1,242/1,243/1,243/1,243/1,243 |
| 14 | 1,240/1,241/1,241/1,241/1,242/1,242 |
| 21 | 1,242/1,242/1,243/1,242/1,243/1,242 |

a) Hydrolysemedium: destilliertes Wasser / ca. 100°C

| Zeit [Tage] | relative Lösungsviskosität ηᵣₑₗ |
|---|---|
| 0 | 1,242 / 1,242 (Nullprobe) |
| 7 | 1,242 / 1,243 / 1,242 / 1,243 /1,243 /1,242 |
| 14 | 1,241 / 1,241 /1,241 /1,242 /1,241 /1,241 |
| 21 | 1,242 / 1,243 /1,242 / 1,241 / 1,244 /1,243 |

### Beispiel 8:

Hydrolysetest eines TMC-Polyformals
(analog aus Beispiel 1, jedoch mit größerem Molekulargewicht;
- Molekulargewicht Mw = 50311, Mn = 21637, D = 2,32 nach GPC (Eichung gegen Polycarbonat).
- Glastemperatur Tg = 172°C
- Relative Lösungsviskosität in Methylenchlorid (0,5 g/100 ml Lösung) = 1,288/1,290

Der Hydrolysetest erfolgt durchBelastung mit folgenden Hydrolysemedien/Temperaturbedingungen und :zeitabhängiger Ermittlung der Molekulargewichts-veränderung durch Messung der relativen Lösungsviskosität in Methylenchlorid (0,5 g/100 ml Lösung):

| | |
|---|---|
| Hydrolysemedium: | 0,1 N HCl / 80°C |
| | 0,1 N NaOH / 80°C |
| | dest. Wasser / ca. 100°C |

Es ergeben sich folgende Ergebnisse bis zu einer Gesamtbelastungsdauer von 21 Tagen (jeweils Mehrfachbestimmungen):
a) Hydrolysemedium: 0,1 N HCl / 80°C

| Zeit [Tage] | relative Lösungsviskosität ηᵣₑₗ |
|---|---|
| 0 | 1,288 /1,290 (Nullprobe; nach Verspritzen zum 80x10x4-Stab) |
| 7 | 1,291 /1,290 / 1,289 / 1,288 / 1,288 /1,290 |
| 14 | 1,288 / 1,288 / 1,289 / 1,289 / 1,288 / 1,288 |
| 21 | 1,288 /1,288 / 1,289 / 1,289 /1,289 /1,289 |

a) Hydrolysemedium: 0,1 N NaOH / 80°C

| Zeit [Tage] | relative Lösungsviskosität ηᵣₑₗ |
|---|---|
| 0 | 1,288 /1,290 (Nullprobe) |
| 7 | 1,289 /1,289 /1,290 /1,290 /1,289 /1,289 |
| 14 | 1,287 / 1,289 /1,288 / 1,289 /1,286 /1,287 |
| 21 | 1,287 / 1,288 / 1,294 / 1,294 / 1,288 / 1,288 |

a) Hydrolysemedium: destilliertes Wasser / ca. 100°C

| Zeit [Tage] | relative Lösungsviskosität ηᵣₑₗ |
|---|---|
| 0 | 1,288 /1,290 (Nullprobe) |
| 7 | 1,285 |
| 14 | 1,281 |
| 21 | 1,284 |

### Beispiel 9:

### Hydrolysetest des Polycarbonates Makrolon^{®} 2808, Bayer AG (Vergleichsexperimente)

Der Hydrolysetest erfolgt durchBelastung mit folgenden Hydrolysemedien/Temperaturbedingungen und :zeitabhängiger Ermittlung der Molekulargewichtsveränderung durch Messung der relativen Lösungsviskosität in Methylenchlorid (0,5 g/100 ml Lösung):

| | |
|---|---|
| Hydrolysemedium: | 0,1 N HCl / 80°C |
| | 0,1 N NaOH / 80°C |
| | dest. Wasser / ca. 100°C |

Es ergeben sich folgende Ergebnisse bis zu einer Gesamtbelastungsdauer von 21 Tagen (jeweils Mehrfachbestimmungen):
a) Hydrolysemedium: 0,1 N HCl / 80°C

| Zeit [Tage] | relative Lösungsviskosität ηᵣₑₗ |
|---|---|
| 0 | 1,284 /1,289 (Nullprobe; nach Verspritzen zum 80x10x4-Stab) |
| 7 | 1,282/1,280/1,281/1,283/1,278/1,280 |
| 14 | 1,280/1,281/1,278/1,279/1,280/1,280 |
| 21 | 1,275 /1,276 /1,276 /1,276 /1,277 /1,277 |

a) Hydrolysemedium: 0,1 N NaOH / 80°C

| Zeit [Tage] | relative Lösungsviskosität ηᵣₑₗ |
|---|---|
| 0 | 1,284/1,289 (Nullprobe) |
| 7 | 1,279 /1,280 / 1,279 /1,279 / 1,280 /1,280 |
| 14 | 1,277 /1,277 / 1,277 /1,277 /1,279 /1,279 |
| 21 | 1,277 /1,277 /1,274 / 1,274 /1,279 /1,282 |

a) Hydrolysemedium: destilliertes Wasser /ca. 100°C

| Zeit [Tage] | relative Lösungsviskosität ηᵣₑₗ |
|---|---|
| 0 | 1,284 /1,289 (Nullprobe) |
| 7 | 1,272 |
| 14 | 1,273 |
| 21 | 1,273 |

Man sieht deutlich, dass sich die Lösungsviskosität von Polycarbonat nach Hydrolysebelastung stärker verringert, als dies bei Polyformalen der Fall ist. Dies bedeutet, dass Polycarbonat leichter abgebaut werden kann, und somit weniger stabil ist, als Polyformal. Eine Coextrusionsschicht aus Polyformal wirkt also als Schutzschicht gegen vorzeitige Schädigung der Platte.

### Beispiel 10:

### Synthese des Copolyformals aus Bisphenol TMC und Resorcin:

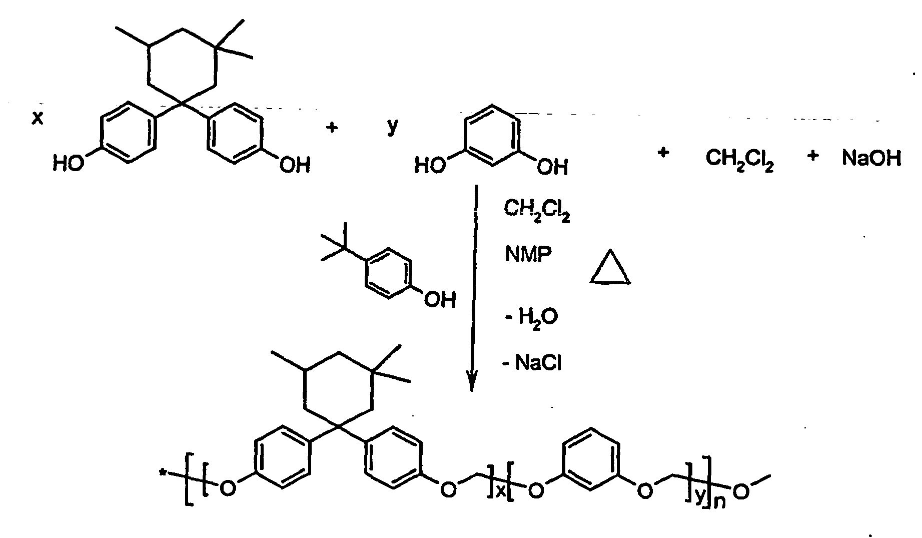

39,1 g (0,126 mol) Bisphenol TMC (x=90 mol-%), 1,542 g (0,014 mol) Resorcin (y=10 mol-%), 14,0 g (0,35 mol) Natriumhydroxid-Plätzchen und 0,21 g (0,0014 mol) fein gemörsertes p-tert-Butylphenol (Aldrich) werden zu einem Lösungsmittelgemisch aus 125 ml Methylenchlorid und 225 ml N-Methyl-2-pyrrolidon (NMP) unter Rühren und Stickstoffschutzgas hinzugegeben. Nach Homogenisierung wird auf Rückfluss (78°C) aufgeheizt und eine Stunde lang bei dieser Temperatur gerührt. Nach dem Abkühlen bis auf 25°C wird der Reaktionsansatz mit Methylenchlorid und entmineralisiertem Wasser verdünnt und anschließend mit Wasser neutral und salzfrei (Leitfähigkeit < 15 µS.cm⁻¹) gewaschen. Die organische Phase wird abgetrennt. Die Isolierung des Polymers erfolgt durch Ausfällen in Methanol. Nach dem Waschen des Produktes mit Wasser und Methanol und Abtrennen der Cyclen mit Aceton sowie Trocknung bei 80°C erhält man das Polyformal als weiße Polymerfäden.

### Analytik:

- Molekulargewicht Mw = 32008, Mn = 12251, D = 2,6 nach GPC (Eichung gegen Polycarbonat).
- Glastemperatur Tg = 163°C

### Beispiel 11:

### Synthese des Copolyformals aus Bisphenol TMC und m-p-Bisphenol A

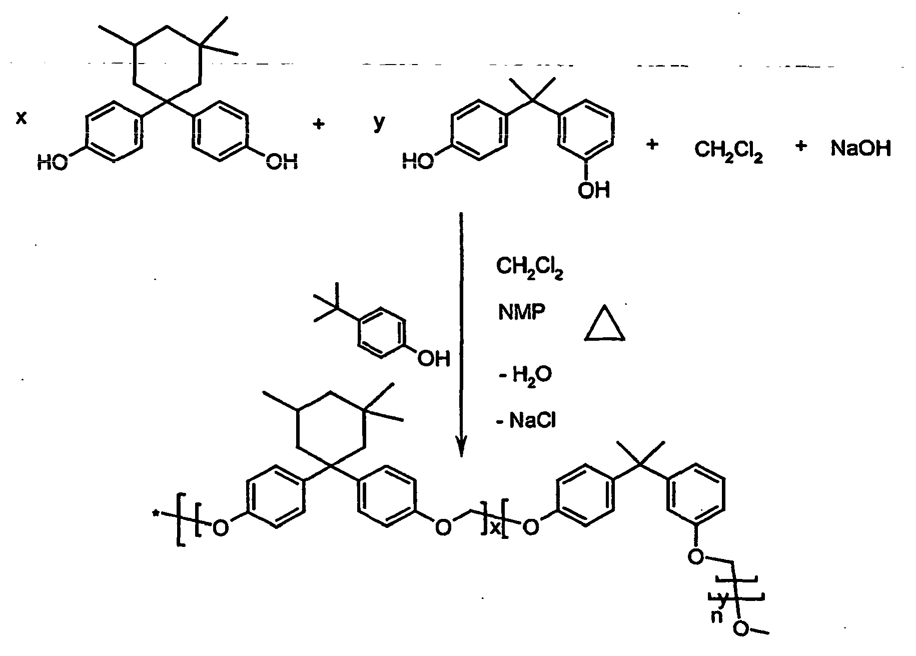

14,84 g (0,065 mol) Bisphenol TMC (x=50 mol-%), 20,18 g (0,065 mol) m,p-Bisphenol A (3,4-Isopropylidendiphenol) (y=50 mol-%), 14,0 g (0,35 mol) Natriumhydroxid-Plätzchen und 0,21 g (0,0014 mol) fein gemörsertes p-tert-Butylphenol (Aldrich) werden zu einem Lösungsmittelgemisch aus 125 ml Methylenchlorid und 225 ml N-Methyl-2-pyrrolidon (NMP) unter Rühren und Stickstoffschutzgas hinzugegeben. Nach Homogenisierung wird auf Rückfluss (78°C) aufgeheizt und eine Stunde lang bei dieser Temperatur gerührt. Nach dem Abkühlen bis auf 25°C wird der Reaktionsansatz mit Methylenchlorid und entmineralisiertem Wasser verdünnt und anschließend mit Wasser neutral und salzfrei (Leitfähigkeit < 15 µS.cm⁻¹) gewaschen. Die organische Phase wird abgetrennt. Die Isolierung des Polymers erfolgt durch Ausfällen in Methanol. Nach dem Waschen des Produktes mit Wasser und Methanol und Abtrennen der Cyclen mit Aceton sowie Trocknung bei 80°C erhält man das Polyformal als weiße Polymerfäden.

### Analytik:

- Molekulargewicht Mw = 28254, Mn = 16312, D = 1,73 nach GPC (Eichung gegen Polycarbonat).
- Glastemperatur Tg = 92°C

### Beispiel 12:

### Synthese des Copolyformals aus Bisphenol A und 4,4'-Sulfondiphenol

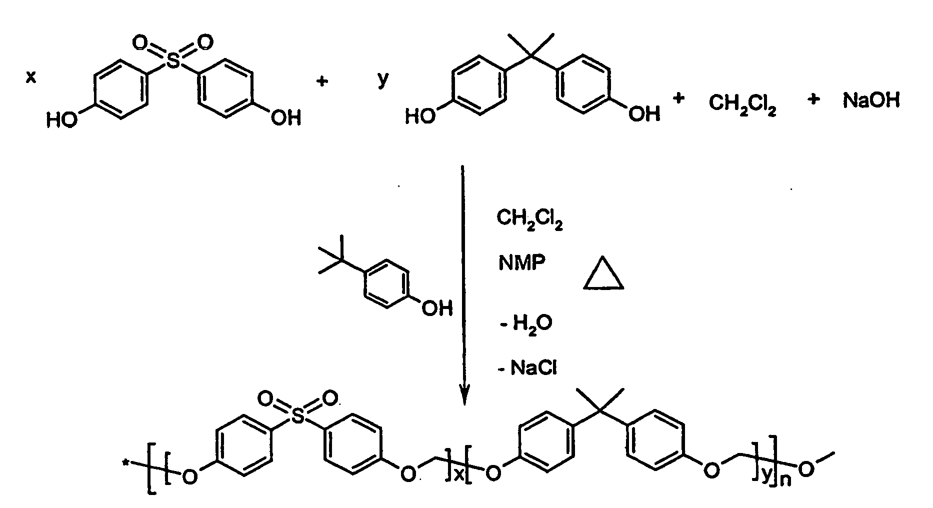

36,29 g (0,145 mol) 4,4'-Sulfondiphenol (x=50 mol-%), 33,46 g (0,145 mol) Bisphenol A (y=50 mol-%), 28,8 g (0,72 mol) Natriumhydroxid-Plätzchen und 0,436 g (0,0029 mol) fein gemörsertes p-tert-Butylphenol (Aldrich) werden zu einem Lösungsmittelgemisch aus 300 ml Methylenchlorid und 570 ml N-Methyl-2-pyrrolidon (NMP) unter Rühren und Stickstoffschutzgas hinzugegeben. Nach Homogenisierung wird auf Rückfluss (78°C) aufgeheizt und eine Stunde lang bei dieser Temperatur gerührt. Nach dem Abkühlen bis auf 25°C wird der Reaktionsansatz mit Methylenchlorid und entmineralisiertem Wasser verdünnt und anschließend mit Wasser neutral und salzfrei (Leitfähigkeit < 15 µS.cm⁻¹) gewaschen. Die organische Phase wird abgetrennt Die Isolierung des Polymers erfolgt durch Ausfällen in Methanol. Nach dem Waschen des Produktes mit Wasser und Methanol und Abtrennen der Cyclen mit Aceton sowie Trocknung bei 80°C erhält man das Polyformal als weiße Polymerfäden.

### Analytilc

- Molekulargewicht Mw = 21546, Mn = 7786, D = 2,76 nach GPC (Eichung gegen Polycarbonat).
- Glastemperatur Tg =131°C

### Beispiel 13:

### Synthese des Polyformals aus 4,4'-Dihydroxyphenylether

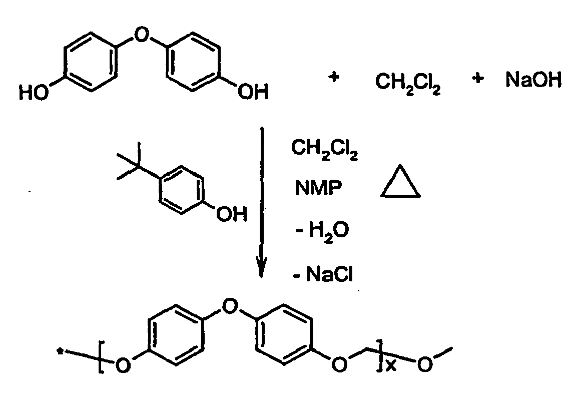

28,30 g (0,14 mol) 4,4'-Hihydroxyphenylether (Bayer AG), 14,0 g (0,35 mol) Natriumhydroxid-Plätzchen und 0,21 g (0,0014 mol) fein gemörsertes p-tert-Butylphenol (Aldrich) werden zu einem Lösungsmittelgemisch aus 125 ml Methylenchlorid und 225 ml N-Methyl-2 pyrrolidon (NMP) unter Rühren und Stickstoffschutzgas hinzugegeben. Nach Homogenisierung wird auf Rückfluss (78°C) aufgeheizt und eine Stunde lang bei dieser Temperatur geführt. Nach dem Abkühlen bis auf 25°C wird der Reaktionsansatz mit Methylenchlorid und entmineralisiertem Wasser verdünnt. und anschließend mit Wasser neutral und salzfrei (Leitfähigkeit < 15 µS.cm⁻¹) gewaschen. Die organische Phase wird abgetrennt. Die Isolierung des Polymers erfolgt durch Ausfällen in Methanol. Nach dem Waschen des Produktes mit Wasser und Methanol und Abtrennen der Cyclen mit Aceton sowie Trocknung bei 80°C erhält man das Polyformal als weiße Polymerfäden.

### Analytik:

- Molekulargewicht Mw = 24034, Mn = 9769, D = 2,46 nach GPC (Eichung gegen Polycarbonat).
- Glastemperatur Tg = 57 °C

### Beispiel 14:

### Massivplatten:

3 mm dicke coextrudierte Massivplatten, A bis D, wurden aus folgenden Zusammensetzungen (Formmassen) erhalten:

Als Basismaterial für die Platten A bis D wurde Makrolon^{®} 3103 (lineares Bisphenol-A Homopolycarbonat der Firma Bayer AG, Leverkusen, Deutschland mit dem Schmelzflussindex (MFR) von 6,5 g/10 min bei 300°C und 1,2 kg Belastung (gemessen nach ISO 1133)) verwendet Makrolon^{®} 3103 enthält UV-Absorber.

Als Coextrusionsschicht wurden die Polyformale A bis D mit den in der Tabelle angegebenen Zusammensetzungen der auf Basis von TMC-Polyformal bzw. BPA-Polyformal mit einer Lösungsviskosität von 1,234 bzw. 1,237 verwendet.

Die Dicke der Coextrusionsschicht betrug jeweils etwa 50 µm.

Die folgende Tabelle fasst den Aufbau der Platten zusammen:

| **Platte** | **Coextrusionsschicht** |
|---|---|
| **A** | TMC Polyformal mit 5 Gew.% Tinuvin 360*) |
| **B** | TMC-Polyformal |
| **C** | BPA-Polyformal mit 5 Gew.% Tinuvin 360 |
| **D** | BPA-Polyformal |

| | |
|---|---|
| *) Tinuvin^{®} 360 ist 2,2'-Methylen-bis[4-(1,1,3,3-tetramethylbutyl)-6-benzotriazolylphenol] und ist im Handel erhältlich als Tinuvin^{®} 360 der Fa. Ciba Spezialitätenchemie, Lampertheim, Deutschland. | |

### Beispiel 15:

Das Polyformal aus Beispiel 2 wird mit 7 Gew.-% Tinuvin 360 versetzt. Aus dieser Mischung wird eine 50 Mikrometer dicke Folie hergestellt (Gießfilm). Analog stellt man eine Folie aus Makrolon 3108 mit 7 Gew.% Tinuvin 360 her (Vergleichsprobe 1).

Diese Folien werden als Schutzschicht auf 4 mm dicke Polycarbonatplatten aus Makrolon 2600 durch Plattieren aufgebracht. Als weitere Vergleichsprobe 2 dient eine Polycarbonatplatte aus Makrolon 2600 ohne weitere Schutzschicht.

Die UV-Absorber-haltigen polyformalproben sowie die Vergleichsproben 1 und 2 werden einer Bewitterung im Xenon WOM (Fa. Atlas) unter folgenden Bedingungen ausgesetzt:
Bewitterung mit Beregnung Zyklus 102:18

| | |
|---|---|
| Bestrahlungsstärke: | 1400 W/m2 (bei 300-800 nm) |
| | 3,3 W / m2 (bei 420 nm) |
| | 0,9 W/m2 (bei 340 nm) |

Schwarztafel-Temperatur: 85°C
Innemaum-Temperatur: 67°C

Folgende Ergebnisse werden nach 2000 Stunden Bewitterung erhalten:

| Probe | T [%], 0 Stunden | T[%], 2000 Stunden | YI 0 Stunden | YI 2000 Stunden | Tr[%] 0 Stunden | Tr [%] 2000 Stunden |
|---|---|---|---|---|---|---|
| Polyformal mit | 87 | 86,5 | 7 | 7 | 3 | 12 |
| UV-Absorber | | 86,5 | | 7 | | 12 |
| Polycarbonat | 87,5 | 54 | 7 | 33,5 | 1 | 69 |
| ohne UV-Absorber | | 64 | | 34,5 | | 80 |
| Polycarbonat mit | 87 | 86 | 7 | 7,5 | 3 | 19,5 |
| UV-Absorber | | 86,5 | | 9,5 | | 20 |

| | | | | | | |
|---|---|---|---|---|---|---|
| T= Transmission YI = Yellowness-Index Tr = Trübung | | | | | | |

Durch mikroskopischer Beobachtung ist bei den Blindproben außerdem eine sehr starke Rissbildung festzustellen. Im Vergleich dazu sind bei der Polyformalprobe keine Risse zu beobachten.

Die verwendeten Maschinen und Apparate zur Herstellung der mehrschichtigen Massivplatten werden im Folgenden beschrieben:

Die Einrichtung bestand aus:
- dem Hauptextruder mit einer Schnecke der Länge 33 D und einem Durchmesser von 60 mm mit Entgasung
- dem Coexadapter (Feedblocksystem)
- einem Coextruder zum Aufbringen der Deckschicht mit einer Schnecke der Länge 25 D und einem Durchmesser von 30 mm.
- der speziellen Breitschlitzdüse mit 350 mm Breite
- dem Glättkalander
- der Rollbahn
- der Abzugeinrichtung
- der Ablängevorrichtung (Säge)
- dem Ablagetisch

Das Polycarbonat des Basismaterials wurde dem Fülltrichter des Hauptextruders zugeführt, das Coextrusionsmaterial dem des Coextruders. Im jeweiligen Plastifiziersystem (Zylinder/Schnecke) erfolgte das Aufschmelzen und Fördern des jeweiligen Materials. Beide Materialschmelzen wurden im Coexadapter zusammengeführt und bildeten nach Verlassen der Düse und Abkühlen im Kalander einen Verbund. Die weiteren Einrichtungen dienten dem Transport, Ablängen und Ablegen der coextrudierten Platten.

Die erhaltenen Platten wurden anschließend visuell begutachtet Man erhält transparente zur Verwendung wie beschrieben geeignete Platten.

## Patentansprüche

1. Mehrschichtiges Erzeugnis umfassend eine Schicht enthaltend mindestens einen beliebigen Thermoplasten und eine Schicht enthaltend als Thermoplasten ein Polyformal oder Copolyformal.

2. Mehrschichtiges Erzeugnis -gemäß Anspruch 1 **dadurch gekennzeichnet, dass** es in mindestens einer Coextrusionsschicht Polyformale bzw. Copolyformale der allgemeinen Formeln (1a) bzw. (1b) enthält, 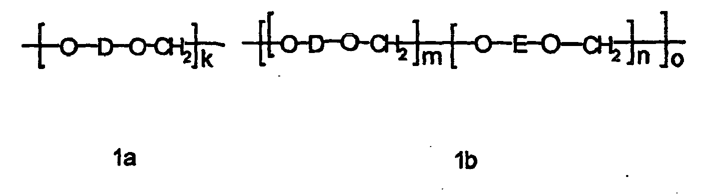 worin die Reste O-D-O und O-E-O für beliebige Diphenolatreste stehen, in denen D- und -E- aromatische Reste mit 6 bis 40 C-Atomen sind, die einen oder mehrere aromatische oder kondensierte, ggf Heteroatome enthaltende aromatische Kerne enthalten können und ggf, mit C₁-C₁₂-A1kylresten oder Halogen substituiert sind und aliphatische Reste, cycloaliphatische Reste, aromatische Kerne oder Heteroatome als Brückenglieder enthalten können und in denen k für eine ganze Zahl zwischen 1 und 1500 und m für eine Bruchzahl z/o und n für eine Bruchzahl (o-z)/o steht wobei z für Zahlen zwischen 0 und o steht.

3. Mehrschichtiges Erzeugnis gemäß Anspruch 1 wobei die Basisschicht aus Polycarbonat, Copolycarbonat, Polyester, Copolyester, Polyestercarbonat, Polycarbonat-Polyester Blend oder Polymethylmethacrylat besteht.

4. Mehrschichtiges Erzeugnis nach Anspruch 1, wobei das Basispolymer ausgewählt ist aus der Gruppe bestehend aus dem Homopolycarbonat auf Basis von Bisphenol A, dem Homopolycarbonat auf Basis von 1,1-Bis-(4-hydroxyphenyl)-3,3,5-trimethylcyclohexan, den Copolycarbonaten auf Basis der beiden Monomere Bisphenol A und 1,1-Bis-(4-hydroxyphenyl)-3,3,5-trimethylcyclohexan und den Copolycarbonaten auf Basis der beiden Monomere Bisphenol A und 4,4'-Dihydroxydiphenyl.

5. Mehrschichtiges Erzeugnis nach Anspruch 1, wobei die Beschichtung zusätzlich 1 bis 20 Gew.-% UV-Absorber enthält.

6. Mehrschichtiges Erzeugnis nach Anspruch 1, wobei die Beschichtung 10 bis 500 µm dick ist.

7. Verfahren zur Herstellung der mehrschichtigen Erzeugnisse nach einem der Ansprüche 1 bis 9 durch Coextrusion.

8. Erzeugnis, das ein mehrschichtiges Erzeugnis nach einem der Ansprüche 1 bis 7 enthält.

9. Zusammensetzung enthaltend ein Polyformal bzw. Copolyformal gemäß Anspruch 1 und einen W Absorber.

10. Verwendung der Zusammensetzung gemäß Anspruch. 9 als Coextrusionsmaterial.

## Claims

1. Coextruded multi-layer product comprising a layer containing at least one thermoplastic of any kind and a layer containing a polyformal or copolyformal as the thermoplastic.

2. Coextruded multi-layer product according to claim 1, **characterised in that** it contains, in at least one coextrusion layer, polyformals or copolyformals of the general formulae (1a) or (1b), 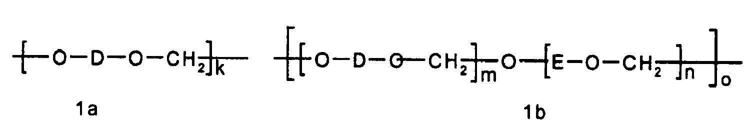 in which the groups O-D-O and O-E-O stand for any diphenolate groups, in which -D- and -E- are aromatic groups having 6 to 40 C atoms, which may contain one or more aromatic or condensed aromatic nuclei, optionally containing heteroatoms, and are optionally substituted with C₁-C₁₂-alkyl groups or halogen and may contain aliphatic groups, cycloaliphatic groups, aromatic nuclei or heteroatoms as bridging links, and in which k stands for a whole number from 1 to 1500 and m for a fractional number z/o and n for a fractional number (o-z)/o wherein z stands for numbers from 0 to o.

3. Coextruded multi-layer product according to claim 1, wherein the arbitrary thermoplastic is polycarbonate, copolycarbonate, polyester, copolyester, polyester carbonate, polycarbonate-polyester blend or polymethyl methacrylate.

4. Coextruded multi-layer product according to claim 3, wherein the arbitrary thermoplastic is selected from the group consisting of the homopolycarbonate based on bisphenol A, the homopolycarbonate based on 1,1-bis-(4-hydroxyphenyl)-3,3,5-trimethylcyclohexane, the copolycarbonates based on the two monomers bisphenol A and 1,1-bis-(4-hydroxyphenyl)-3,3,5-trimethylcyclohexane and the copolycarbonates based on the two monomers bisphenol A and 4,4'-dihydroxydiphenyl.

5. Coextruded multi-layer product according to claim 1, wherein the layer containing a polyformal or copolyformal as thermoplastic additionally contains 1 to 20 wt.% UV absorbers.

6. Coextruded multi-layer product according to claim 1, wherein the layer containing a polyformal or copolyformal as thermoplastic is 10 to 500 µm thick.

7. Process for the production of the coextruded multi-layer products according to one of claims 1 to 9 by coextrusion.

8. Coextruded multi-layer product that contains a multi-layer product according to one of the claims 1 to 7.

9. Composition containing a polyformal or copolyformal according to claim 1 and a UV absorber.

10. Use of the composition according to claim 9 as a coextrusion material.

## Revendications

1. Produit multicouches co-extrudé comprenant une couche qui contient au moins un thermoplastique quelconque et une couche qui contient comme thermoplastique un polyformal ou un copolyformal.

2. Produit multicouches co-extrudé selon la revendication 1, **caractérisé en ce que**, dans au moins une couche de co-extrusion, il contient des polyformals ou des copolyformals de formule générale (1a) ou (1b),
| | |
|---|---|
| 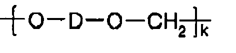 | 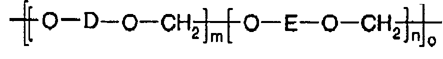 |
| 1a | 1b |
formules dans lesquelles les restes O-D-O et O-E-O représentent des restes diphénolate quelconques dans lesquels -D- et -E- sont des restes aromatiques de 6 à 40 atomes de carbone qui peuvent contenir un ou plusieurs noyaux aromatiques ou un ou plusieurs noyaux aromatiques condensés contenant le cas échéant des hétéroatomes et substitués le cas échéant par des restes alkyle en C₁ à C₁₂ ou par un halogène et qui peuvent contenir des restes aliphatiques, des restes cycloaliphatiques, des noyaux aromatiques ou des hétéroatomes comme éléments de pontage, et dans lesquelles k est un nombre entier valant de 1 à 1500, m est un nombre fractionnaire égal à z/o et n est un nombre fractionnaire égal à (o-z)/o, où z représente des nombres compris entre 0 et o.

3. Produit multicouches co-extrudé selon la revendication 1, dans lequel le thermoplastique quelconque est un polycarbonate, un copolycarbonate, un polyester, un copolyester, un polyester carbonate, un mélange de polycarbonate et de polyester, ou le polyméthacrylate de méthyle.

4. Produit multicouches co-extrudé selon la revendication 3, dans lequel le thermoplastique quelconque est choisi dans le groupe constitué par l'homopolycarbonate à base de bisphénol A, l'homopolycarbonate à base de 1,1-bis-(4-hydroxyphényl)-3,3,5- triméthylcyclohexane, le copolycarbonate à base des deux monomères bisphénol A et 1,1-bis-(4-hydroxyphényl)-3,3,5-triméthylcyclohexane et le copolycarbonate à base des deux monomères bisphénol A et 4,4'-dihydroxydiphényle.

5. Produit multicouches co-extrudé selon la revendication 1, dans lequel la couche contenant comme thermoplastique un polyformal ou un copolyformal contient en plus de 1 à 20% en poids d'agent absorbant les UV.

6. Produit multicouches co-extrudé selon la revendication 1, dans lequel la couche contenant comme thermoplastique un polyformal ou un copolyformal a une épaisseur de 10 à 500 µm.

7. Procédé de fabrication du produit multicouches co-extrudé selon l'une des revendications 1 à 9 par co-extrusion.

8. Produit multicouches co-extrudé contenant un produit multicouches selon l'une des revendications 1 à 7.

9. Composition contenant un polyformal ou un copolyformal selon la revendication 1 et un agent absorbant les UV.

10. Utilisation de la composition selon la revendication 9 comme matériau de co-extrusion.
